# EUROPEAN PATENT SPECIFICATION

(11) **EP 2 882 179 B1**
(45) Date of publication and mention of the grant of the patent: **01.04.2020**
(21) Application number: 13825498.2
(22) Date of filing: 26.06.2013
(51) Int. Cl.: G06F 21/62, H04N 1/00, H04N 5/232, H04L 29/08, H04N 21/2743, H04N 21/414, H04N 101/00

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS ET PROGRAMME

(30) Priority: 31.07.2012 JP 2012169609
(43) Date of publication of application: 10.06.2015
(73) Proprietor: Sony Corporation, Tokyo 108-0075 (JP)
(72) Inventor: TAKI, Yuhei, Tokyo 108-0075 (JP)
(74) Representative: MFG Patentanwälte Meyer-Wildhagen Meggle-Freund Gerhard PartG mbB
(86) International application number: PCT/JP2013/067516
(87) International publication number: WO 2014/021031

(56) References cited:
- WO-A2-2012/092025
- JP-A- 2006 014 119
- JP-A- 2006 222 721
- JP-A- 2007 535 023
- JP-A- 2009 099 142
- JP-A- 2009 122 991
- JP-A- 2011 035 768
- JP-A- 2011 035 768
- JP-A- 2011 205 243
- US-A1- 2005 052 685
- US-A1- 2006 099 988
- US-A1- 2009 115 855
- US-A1- 2010 317 400
- US-A1- 2012 060 105
- US-A1- 2012 081 556

## Description

### Technical Field

The present disclosure relates to an information processing apparatus, an information processing method and a program.

### Background Art

It is common to share contents via a network, by digitization of contents such as an image, capacity enlargement of a storage apparatus that accumulates digitalized contents and advancement of a communication technique that transmits data of contents. For example, Patent Literature 1 describes a technique used when the user uploads video data to a video sharing server. Moreover, Patent Literature 2 describes a technique that uploads information collected in real time to a content server and distributes this according to the demand of the end user.

Patent Literature 3 to 6 relate to camera apparatuses configured to receive messages or data processing instructions from outside.

Patent Literature 7 to 11 relate to data sharing systems and possibilities to join a data sharing system.

### Citation List

### Patent Literature

Patent Literature 1: JP 2009-282734A
Patent Literature 2: JP 2009-27703A
Patent Literature 3: JP 2011-35768 A
Patent Literature 4: US 2009/115855 A1
Patent Literature 5: JP 2006-14119 A
Patent Literature 6: US 2006/99988 A1
Patent Literature 7: US 2012/81556 A1
Patent Literature 8: US 2005/52685 A1
Patent Literature 9: US 2012/60105 A1
Patent Literature 10: US 2010/317400 A1
Patent Literature 11: WO 2012/92025 A2

### Summary of Invention

### Technical Problem

However, in a technique for content sharing as mentioned above, data of contents is merely provided from the provider to the user one-sidedly. The user may transmit an impression or the like with respect to the shared contents, but the information is not directed to the provider of the contents and is merely information that accompanies the shared contents.

Therefore, the present disclosure suggests a new, improved information processing apparatus, information processing method and program that can improve the convenience of the provider or user with content sharing by bidirectional communication between the provider and user of the shared contents.

### Solution to Problem

According to a first aspect the invention provides an information processing apparatus in accordance with claim 1. According to a second aspect the invention provides an information processing method in accordance with claim 12. According to a third aspect the invention provides a program in accordance with claim 13. Further aspects of the invention are set forth in the dependent claims, the drawings and the following description of embodiments.

According to the present disclosure, there is provided an information processing apparatus including an image acquisition unit configured to acquire a photographed image, an image transmission unit configured to transmit the photographed image as a shared image, an instruction information reception unit configured to receive instruction information on operation of a user who performs imaging, which is acquired as a response to the shared image, and an instruction information output unit configured to output the instruction information to the user.

According to the present disclosure, there is provided an information processing method including acquiring a photographed image, transmitting the photographed image as a shared image, receiving instruction information on operation of a user who performs imaging, which is acquired as a response to the shared image, and outputting the instruction information to the user.

According to the present disclosure, there is provided a program for causing a computer to realize a function to acquire a photographed image, a function to transmit the photographed image as a shared image, a function to receive instruction information on operation of a user who performs imaging, which is acquired as a response to the shared image, and a function to output the instruction information to the user.

By not only transmitting a photographed image as a shared image but also receiving and outputting instruction information acquired as a response to the shared image, it becomes possible to reflect information such as an instruction, request or advice from the user who refers to the shared image to the operation of the user who performs imaging.

### Advantageous Effects of Invention

As described above, according to the present disclosure, it is possible to improve the convenience of the provider or user with content sharing by bidirectional communication between the provider and user of the shared contents.

### Brief Description of Drawings

[FIG. 1] FIG. 1 is a diagram illustrating a schematic configuration of a system according to a first embodiment of the present disclosure.
[FIG. 2] FIG. 2 is a block diagram illustrating a schematic functional configuration of a content provision terminal according to the first embodiment of the present disclosure.
[FIG. 3] FIG. 3 is a block diagram illustrating a schematic functional configuration of a part related to a position information acquisition unit in the content provision terminal according to a second embodiment of the present disclosure.
[FIG. 4] FIG. 4 is a block diagram illustrating a schematic functional configuration of a part related to a condition information generation unit in the content provision terminal according to a third embodiment of the present disclosure.
[FIG. 5] FIG. 5 is a block diagram illustrating a schematic functional configuration of a part related to a condition information generation unit in the content provision terminal according to a fourth embodiment of the present disclosure.
[FIG. 6] FIG. 6 is a block diagram illustrating a schematic functional configuration of a part related to an imaging preparation state determination unit in the content provision terminal according to a fifth embodiment of the present disclosure.
[FIG. 7] FIG. 7 is a block diagram illustrating a schematic functional configuration of a part related to a permission acquisition unit in the content provision terminal according to a sixth embodiment of the present disclosure.
[FIG. 8] FIG. 8 is a block diagram illustrating a schematic functional configuration of a part related to the permission acquisition unit in the content provision terminal according to a seventh embodiment of the present disclosure.
[FIG. 9] FIG. 9 is a flowchart illustrating an example in which the user's permission is required for the transmission or publication of a shared image in a case where the user's position is near home in the seventh embodiment of the present disclosure.
[FIG. 10] FIG. 10 is a block diagram illustrating a schematic functional configuration of a part related to the permission acquisition unit in the content provision terminal according to an eighth embodiment of the present disclosure.
[FIG. 11] FIG. 11 is a diagram illustrating a display example of the content provision terminal in a case where the sharing of a photographed image is requested from the provider of contents.
[FIG. 12] FIG. 12 is a diagram illustrating a display example when conditions of a sharer are selected in sharing a photographed image in the example of FIG. 11.
[FIG. 13] FIG. 13 is a diagram illustrating a display example in a case where a photographed image is shared with an SNS friend in the example of FIG. 12.
[FIG. 14] FIG. 14 is a diagram illustrating a display example in a content reference terminal in the example of FIG. 13.
[FIG. 15] FIG. 15 is a diagram illustrating a display example in the content provision terminal in a case where imaging is performed in a content reference terminal in the examples of FIGS. 13 and 14.
[FIG. 16] FIG. 16 is a diagram illustrating a display example in a content reference terminal in a case where a photographed image is shared with the user near the present location or the photographic adviser in the example of FIG. 12.
[FIG. 17] FIG. 17 is a diagram illustrating a display example of the content provision terminal in a case where a photographed image is shared with the user near the present location in the examples of FIGS. 12 and 16.
[FIG. 18] FIG. 18 is a diagram illustrating a display example of the content provision terminal in a case where a photographed image is shared with a photographic adviser in the examples of FIGS. 12 and 16.
[FIG. 19] FIG. 19 is a diagram illustrating a display example of the content provision terminal in a case where the photographing timing is presented from the photographic adviser in the example of FIG. 18.
[FIG. 20] FIG. 20 is a diagram illustrating a display example of a content reference terminal in a case where the sharing of a photographed image is requested from a referring person of contents.
[FIG. 21] FIG. 21 is a diagram illustrating a display example of the content provision terminal in a case where the sharing of a photographed image is requested by the user of a content reference terminal in the example of FIG. 20.
[FIG. 22] FIG. 22 is a diagram illustrating another display example of a content reference terminal in a case where the sharing of a photographed image is requested from a referring person of contents.
[FIG. 23] FIG. 23 is a diagram illustrating a display example in the content provision terminal in a case where the enlarged display of a shared image is requested by the user of a content reference terminal in the example of FIG. 22.
[FIG. 24] FIG. 24 is a diagram illustrating a display example of the content provision terminal in a case where it is possible to set permission to independently share the image and audio of a photographed image.
[FIG. 25] FIG. 25 is a diagram illustrating a display example in a case where instruction information to move the visual field of the user of the content provision terminal is acquired by the sharing of a photographed image.
[FIG. 26] FIG. 26 is a block diagram to describe a hardware configuration of an information processing apparatus.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

Here, explanation is given in the following order.
1. First embodiment
2. Second embodiment
3. Third embodiment
4. Fourth embodiment
5. Fifth embodiment
6. Sixth embodiment
7. Seventh embodiment
8. Eighth embodiment
9. Display example when there is request from provider
   Example of sharing with SNS friend
   Example of sharing with those other than friends
10. Display example by request from referring person
11. Other display examples
12. Hardware configuration
13. Supplementation

### (1. First embodiment)

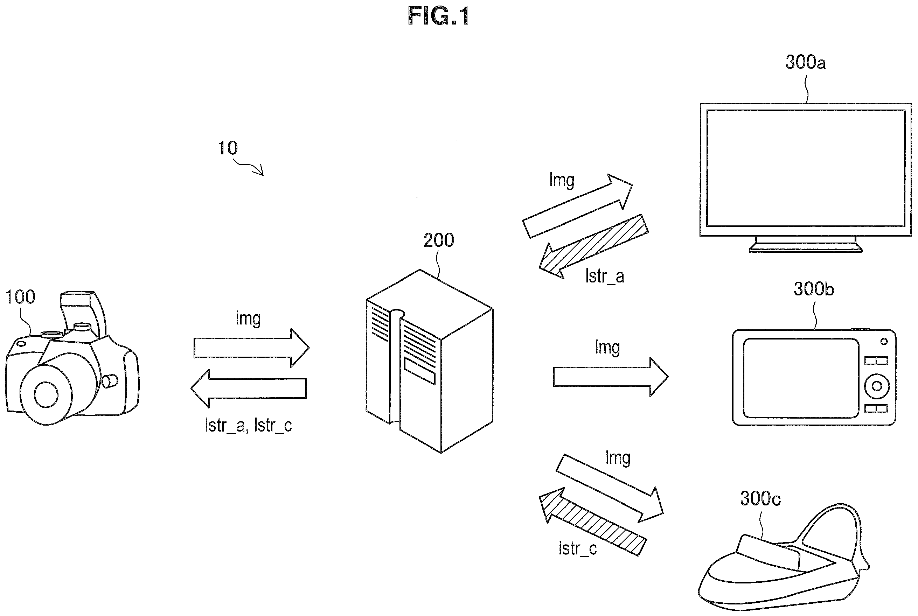

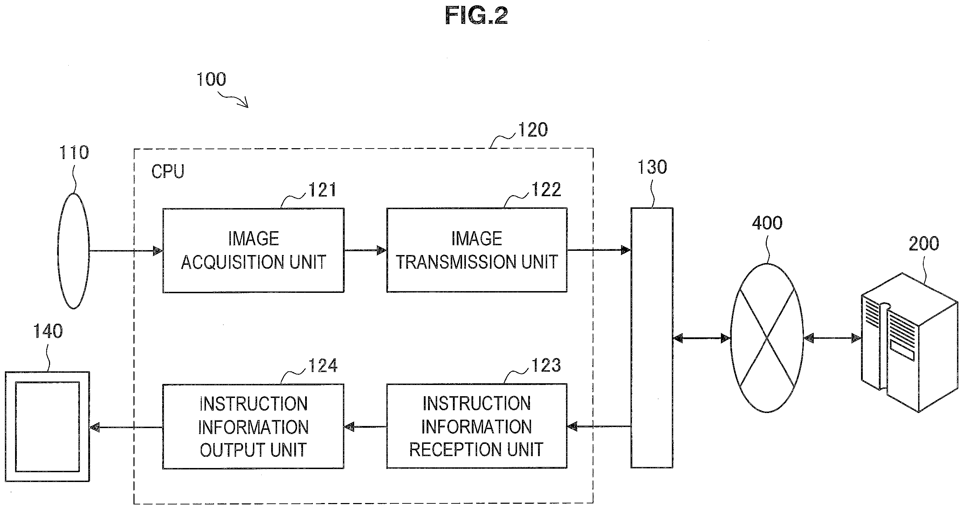

First, the first embodiment of the present disclosure is described with reference to FIGS. 1 and 2.

FIG. 1 is a diagram illustrating the schematic configuration of a system according to the first embodiment of the present disclosure. Referring to FIG. 1, a system 10 includes a content provision terminal 100, a server 200 and a content reference terminal 300.

In the system 10, an image (Img) acquired in the content provision terminal 100 is uploaded to the server 200. In the content reference terminal 300, it is possible to refer to the uploaded image (Img) by accessing the server 200. There may be multiple content reference terminals 300 that refer to the image (Img). In the figure, three content reference terminals 300a, 300b and 300c are exemplified, but the number is not limited to this.

Moreover, in the system 10, instruction information (Istr) is input as a response by the user of the content reference terminal 300 that refers to the image (Img), and is transmitted to the content provision terminal 100 through the server 200. In the illustrated example, instruction information (Istr_a) is transmitted from the content reference terminal 300a and instruction information (Istr_c) is transmitted from the content reference terminal 300c, and the content provision terminal 100 receives these items of instruction information (Istr_a and Istr_c).

Here, the instruction information (Istr) may include an instruction related to the operation of the user who performs imaging by the use of the content provision terminal 100. For example, the instruction information (Istr) may be operation performed for imaging by the user, and specifically may be the one to give advice about equipment operation for imaging. Moreover, the instruction information (Istr) may be a request related to operation to move the user or the user's visual field.

The content provision terminal 100 has a function to transmit the image (Img) acquired by imaging as a shared image and a function to receive the instruction information (Istr) acquired as a response to the image (Img) and output it to the user. For example, the content provision terminal 100 may be various apparatuses that can realize the above-mentioned functions, such as a digital camera, a mobile phone (smart phone) with a camera and a head mounted display (HMD).

The server 200 receives the image (Img) from the content provision terminal 100 and distributes it to the content reference terminal 300. Here, the image (Img) may be a still picture or a moving image. In the case of the moving image, for example, the image (Img) may be distributed to the content reference terminal 300 by the use of a technique such as streaming and progressive download. For example, the server 200 is realized by one or multiple server apparatuses on a network.

The content reference terminal 300 has a function to receive the image (Img) distributed from the server 200 and output it to the user, and a function to receive the instruction information (Istr) input by the user as a response to the image (Img) and transmit it to the server 200. For example, the content reference terminal 300 may be various apparatuses that can realize the above-mentioned functions, such as various personal computers (PC), a television, a digital camera, a portable media player and an HMD.

Here, in the figure, as an example of the content reference terminal 300, a television (content reference terminal 300a), a digital camera (content reference terminal 300b) and an HMD (content reference terminal 300c) are exemplified. The content reference terminal 300b receives the image (Img) but does not transmit the instruction information (Istr). Thus, the content reference terminal 300 may include the one that does not have the function or the one that does not transmit the instruction information (Istr) because the user does not use it even if it is provided. That is, the instruction information (Istr) may not be transmitted as a response from all users who share the image (Img).

Each of the content provision terminal 100, individual server apparatuses forming the server 200 and the content reference terminal 300 which have been described above may be realized using the hardware configuration of an information processing apparatus described below. Moreover, these terminal apparatuses and server apparatuses may be mutually connected by various wired or wireless networks.

FIG. 2 is a block diagram illustrating the schematic functional configuration of a content provision terminal according to the first embodiment of the present disclosure. As mentioned above, the content provision terminal 100 may be realized using the hardware configuration of an information processing apparatus described later.

The content provision terminal 100 has an imaging unit 110, a central processing unit (CPU) 120, a communication unit 130 and an output unit 140. Each component is described below. Here, the content provision terminal 100 may be, for example, a digital camera, a mobile phone (smart phone) with a camera or an HMD. To realize the functions of these apparatuses, other components than the illustrated components may be included in the content provision terminal 100.

For example, the imaging unit 110 is realized by, for example, a lens or other optical systems, an imaging element, a driving unit of the optical system and imaging element, or an image processing circuit to process image data acquired by the imaging element. The imaging unit 110 converts the image of an object existing in a real space around the content provision terminal 100 into image data and outputs this to the CPU 120. Here, in the following explanation, there is a case where the image data is simply called "image". The imaging unit 110 may be disposed so as to acquire an image that does not include the user of the content provision terminal 100. For example, in a case where the content provision terminal 100 has a display as the output unit 140, the imaging unit 110 may be disposed toward the side opposite to the display (that is, the side on which the user is not present).

The CPU 120 realizes the functions of an image acquisition unit 121, image transmission unit 122, instruction information reception unit 123 and instruction information output unit 124 by performing operation according to a program. For example, the program is stored in a read only memory (ROM), a storage apparatus or a removable recording medium, and is read and executed by a CPU. A random access memory (RAM) may be used for the execution of the program. In the following, each function realized by the CPU 120 is described.

The image acquisition unit 121 acquires a photographed image. To be more specific, the image acquisition unit 121 acquires an image that is taken by the imaging unit 110 and output to the CPU 120, and provides it to the image transmission unit 122. Here, the image acquisition unit 121 may acquire photographed images that are continuously acquired by the imaging unit 110, that is, a through image, or may acquire a photographed image only in a case where the photographed image is recorded, that is, a shutter is clicked for the recording of a still image or a case where the recording of a moving image is performed.

The image transmission unit 122 transmits the photographed image as a shared image. To be more specific, the image transmission unit 122 transmits the photographed image acquired by the image acquisition unit 121 to the server 200 through the communication unit 130. The photographed image transmitted to the server 200 can be referred to from the content reference terminal 300. That is, the photographed image becomes a shared image that is shared between the content provision terminal 100 and the content reference terminal 300 or between the content reference terminals 300.

Here, the image transmission unit 122 does not necessarily transmit all images acquired by the image acquisition unit 121 to the server 200. For example, the image transmission unit 122 may transmit the image only in a case where the permission of the user of the content provision terminal 100 is acquired. Moreover, the image transmission unit 122 may transmit the image only in a case where the user's position, that is, the position of the content provision terminal 100 satisfies a predetermined condition.

The instruction information reception unit 123 receives instruction information on the operation of the user who performs imaging, which is acquired as a response to the shared image. To be more specific, the instruction information reception unit 123 receives instruction information from the server 200 through the communication unit 130 and provides it to the instruction information output unit 124. The instruction information may be information input by the user who refers to the shared image in the content reference terminal 300 as mentioned above. The instruction information may be, for example, operation to take an image by the user, specifically, the one to give advice about equipment operation for imaging, or may be a request related to operation to move the user or the user's visual field.

The instruction information output unit 124 outputs the instruction information to the user. To be more specific, it outputs the instruction information received by the instruction information reception unit 123 to the user through the output unit 140. Since the output unit 140 is a display in the illustrated example, the instruction information output unit 124 outputs the instruction information as an image such as a text. Alternatively, in a case where the output unit 140 is a speaker, the instruction information output unit 124 may output the instruction information as audio.

For example, the communication unit 130 is realized by a communication apparatus connected with a wired or wireless network 400. The content provision terminal 100 uses the communication unit 130 and transmits/receives various kinds of information to/from the server 200 via the network 400.

For example, the output unit 140 is realized by various output apparatuses such as a speaker besides the display like the illustrated example. The output unit 140 outputs various kinds of information from the content provision terminal 100 to the user. For example, the output unit 140 outputs the instruction information from the instruction information output unit 124 to the user. Moreover, the output unit 140 may display various kinds of information on the operation of the content provision terminal 100, for example, a through image acquired by the imaging unit 110, various parameters related to imaging or an operation icon.

In the first embodiment of the present disclosure described above, the content provision terminal 100 transmits a photographed image to the server 200 as a shared image and receives instruction information acquired from the server 200 as a response to the shared image. The user who performs imaging by the use of the content provision terminal 100 can receive instruction information on own operation in response to the photographed image. Thus, bidirectional communication is established between the provider and user of contents, and it is possible to further improve the convenience of the provider or user by the sharing of contents.

### (2. Second embodiment)

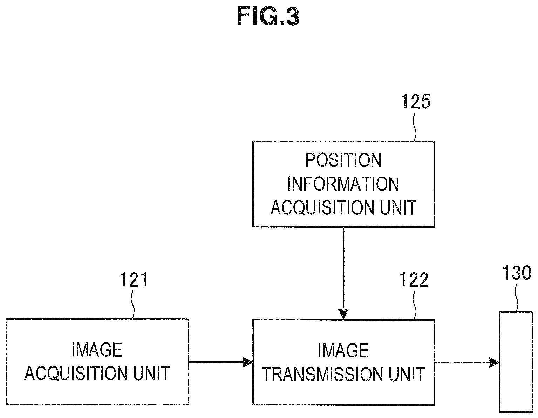

Next, the second embodiment of the present disclosure is described with reference to FIG. 3. Here, the explanation of each following embodiment is based on the configuration of the above-mentioned first embodiment, and the difference from this is chiefly described. Therefore, the configuration similar to the first embodiment may be applied to a part that is not described in detail in the following embodiments.

FIG. 3 is a block diagram illustrating the schematic functional configuration of parts related to the position information acquisition unit in the content provision terminal according to the second embodiment of the present disclosure. In the present embodiment, in addition, the function of a position information acquisition unit 125 is realized by the CPU 120 of the content provision terminal 100. Here, in the figure, other components of the content provision terminal 100 than the parts related to the position information acquisition unit 125 are omitted.

The position information acquisition unit 125 acquires information on the position of the user of the content provision terminal 100. To be more specific, for example, the position information acquisition unit 125 acquires position information based on information from a global positioning system (GPS) sensor as information on the user's position. Moreover, in a case where the communication unit 130 is connected with the network 400 by radio communication, the position information acquisition unit 125 may acquire position information, which is estimated on the basis of the position of a base station of the radio communication and the signal intensity, as information on the user's position. The position information acquisition unit 125 provides the information on the user's position to the image transmission unit 122.

The image transmission unit 122 transmits the information on the user's position provided from the position information acquisition unit 125 to the server 200 via the communication unit 130 together with a photographed image acquired by the image acquisition unit 121. For example, the server 200 distributes a shared image to the content reference terminal 300 together with information that displays the position of the user of the content provision terminal 100 on a map. By this means, in the reference terminal 300, the user of the shared image can refer to the shared image together with information on the imaging place.

Here, in the description of the following embodiments, there is a case where information on the position of the user who transmits a shared image is displayed as a display example in the content reference terminal 300. In this case, the information on the user's position may be transmitted together with the shared image by the use of the position information acquisition unit 125 as mentioned above.

### (3. Third embodiment)

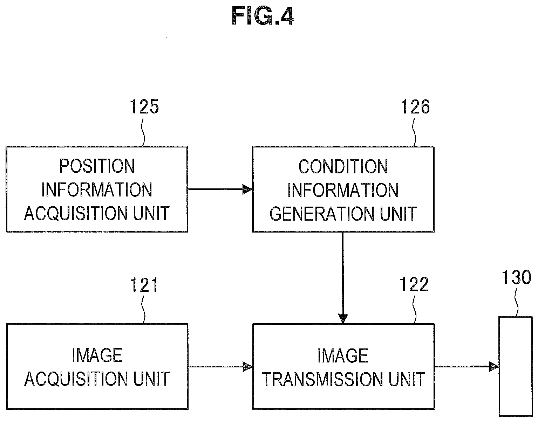

Next, the third embodiment of the present disclosure is described with reference to FIG. 4.

FIG. 4 is a block diagram illustrating the schematic functional configuration of parts related to the condition information generation unit in the content provision terminal according to the third embodiment of the present disclosure. In the present embodiment, in addition, the functions of the position information acquisition unit 125 and condition information generation unit 126 are realized by the CPU 120 of the content provision terminal 100. Here, in the figure, other components of the content provision terminal 100 than parts related to the position information acquisition unit 125 and the condition information generation unit 126 are omitted.

The condition information generation unit 126 generates sharing condition information showing sharer conditions. In the present embodiment, the condition information generation unit 126 generates sharing condition information on the basis of the position of the user of the content provision terminal 100, which is acquired by the position information acquisition unit 125. Here, the sharer conditions may be associated with an area including the position of the user of the content provision terminal 100 as shown in the following example, for example. Here, the function of the position information acquisition unit 125 is similar to the one described in the above-mentioned second embodiment. The condition information generation unit 126 provides the generated sharing condition information to the image transmission unit 122.

The image transmission unit 122 transmits the sharing condition information provided from the condition information generation unit 126 to the server 200 through the communication unit 130, together with a photographed image acquired by the image acquisition unit 121. For example, the server 200 distributes a shared image only to the content reference terminal 300 of the user who satisfies the sharer conditions, according to the sharing condition information. Here, the server 200 may directly distribute the shared image to the content reference terminal 300. Alternatively, the server 200 may transmit information on an image that can be shared to the content reference terminal 300, and distribute a shared image selected by the user of the content reference terminal 300 therefrom.

As an example of the condition setting in the present embodiment, for example, the condition information generation unit 126 may set conditions that a user existing in a predetermined area related to the position of the user of the content provision terminal 100 is assumed to be a sharer. For example, such conditions may be effective in a case where the user of the content provision terminal 100 travels around a certain land, shares a photographed image with people in the land and aims to acquire information on photography spots and sightseeing spots.

Moreover, for example, the condition information generation unit 126 may set conditions that the user outside a predetermined area related to the position of the user of the content provision terminal 100 is assumed to be a sharer. For example, such conditions may be effective in a case where the user of the content provision terminal 100 does not want the own address to be specified from a shared photographed image.

Here, in the above-mentioned two examples, for example, in the server 200, it is determined whether the user of the content reference terminal 300 may become a sharer. For example, the position of the user of the content reference terminal 300 used for this determination may be acquired using a GPS or the like in the content reference terminal 300, or each user's registration information held by the server 200 or the IP address of each user may be used. An area unit is arbitrary, and, for example, it may be a country, a province or a city. Moreover, instead of the area, a geometrical area like within a predetermined distance from the user's position may be used for the conditions. Moreover, the conditions generated by the condition information generation unit 126 may be set or changed by user operation with respect to the content provision terminal 100.

### (4. Fourth embodiment)

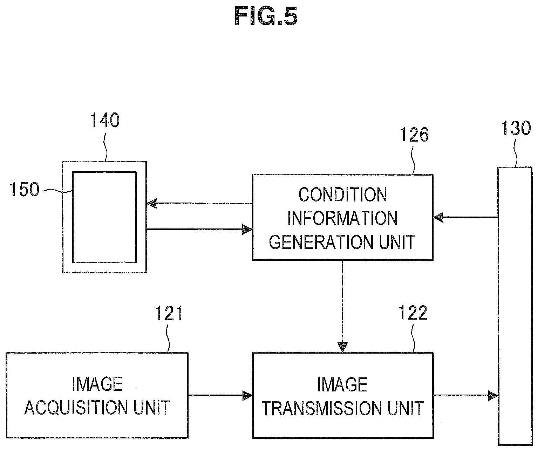

Next, the fourth embodiment of the present disclosure is described with reference to FIG. 5.

FIG. 5 is a block diagram illustrating the schematic functional configuration of parts related to the condition information generation unit in the content provision terminal according to the fourth embodiment of the present disclosure. In the present embodiment, in addition, the function of the condition information generation unit 126 is realized by the CPU 120 of the content provision terminal 100. Here, in the figure, other components of the content provision terminal 100 than parts related to the condition information generation unit 126 are omitted.

Similar to the above-mentioned third embodiment, the condition information generation unit 126 generates sharing condition information showing sharer conditions. In the present embodiment, the condition information generation unit 126 generates the sharing condition information on the basis of user's setting operation acquired by an operation unit 150. For example, the operation unit 150 may be a touch panel installed in the surface of a display installed as the output unit 140, but it is not limited to this example and may be realized by various input apparatuses such as a button, a dial and a keypad. When providing information to set the conditions to the user, the condition information generation unit 126 may acquire information from the network 400 through the communication unit 130. The condition information generation unit 126 provides the generated sharing condition information to the image transmission unit 122.

Similar to the above-mentioned third embodiment, the image transmission unit 122 transmits the sharing condition information provided from the condition information generation unit 126, to the server 200, and the server 200 uses the received sharing condition information to select the content reference terminal 300 that distributes a shared image.

As an example of condition setting in the present embodiment, for example, the condition information generation unit 126 may set conditions that a user in friendship with the user of the content provision terminal 100 is assumed to be a sharer in a social networking service (SNS). This SNS may be provided by the server 200 or may be provided by another server. Therefore, the sharing of a photographed image may be provided as one of services by the SNS or may be separately provided.

In the above-mentioned example, the condition information generation unit 126 may access the server 200 or other servers that provide the SNS through the communication unit 130, and acquire information on an SNS used by the user of the content provision terminal 100 or information on the user in friendship with the user.

Moreover, for example, in a case where there are multiple SNS's used by the user, the condition information generation unit 126 may acquire a user's instruction as to which SNS friend a photographed image is shared with, through the operation unit 150. There may be multiple SNS's selected at this time. In addition, for example, in a case where there are multiple user's friends in an SNS, the condition information generation unit 126 may acquire a user's instruction as to which friend an photographed image is shared with, through the operation unit 150. There may be multiple friends selected at this time.

### (5. Fifth embodiment)

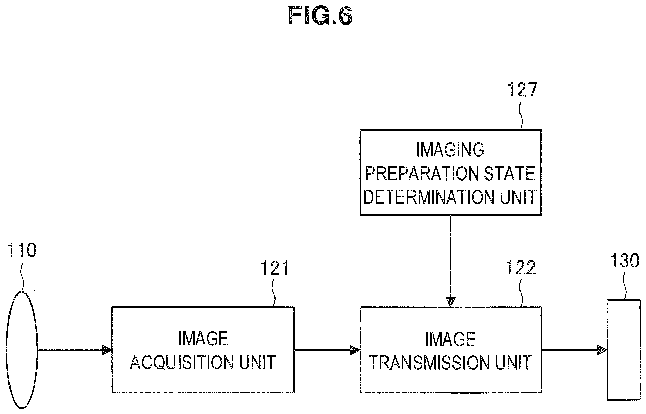

Next, the fifth embodiment of the present disclosure is described with reference to FIG. 6.

FIG. 6 is a block diagram illustrating the schematic functional configuration of parts related to the imaging preparation state determination unit in the content provision terminal according to the fifth embodiment of the present disclosure. In the present embodiment, in addition, the function of an imaging preparation state determination unit 127 is realized by the CPU 120 of the content provision terminal 100. Here, in the figure, other components of the content provision terminal 100 than the parts related to the imaging preparation state determination unit 127 are omitted.

The imaging preparation state determination unit 127 determines whether the user is in the record preparation state of a photographed image. To be more specific, for example, the imaging preparation state determination unit 127 may detect the posture of the chassis of the content provision terminal 100 on the basis of information from an acceleration sensor and determine whether it shows the record preparation state of a photographed image. Moreover, for example, in a case where the imaging unit 110 is not consecutively activated, the imaging preparation state determination unit 127 may determine that the user is in the record preparation state of a photographed image when the imaging unit 110 is activated by turning on a power source or activating an imaging function. The imaging preparation state determination unit 127 provides the result of the above-mentioned determination to the image transmission unit 122.

In a case where the imaging preparation state determination unit 127 determines that the user is in the record preparation state of the photographed image, the image transmission unit 122 transmits the photographed image acquired from the image acquisition unit 121 to the server 200 through the communication unit 130.

As described in the above-mentioned first embodiment, the image acquisition unit 121 may acquire photographed images continuously acquired by the imaging unit 110, that is, a through image. In the present embodiment, the image acquisition unit 121 acquires the through image acquired before or after the record of the photographed image. However, if the image transmission unit 122 unconditionally transmits the through image as a shared image, there is a possibility that meaningless images when the user of the content provision terminal 100 moves in the interval of imaging are consecutively transmitted or even a private image which the user does not want to release is transmitted as a shared image.

Therefore, in the present embodiment, the imaging preparation state determination unit 127 determines whether the user prepares the record of a photographed image. By this means, for example, only in a case where the user prepares the record of the photographed image, it is possible to share the photographed image and transmit a meaningful image for the user of the content reference terminal 300 as a shared image. Moreover, for example, by not sharing the photographed image while the user does not prepare the record of the photographed image, that is, while the user of the content provision terminal 100 is not aware that the photographed image is acquired, it is possible to protect the user's privacy.

### (6. Sixth embodiment)

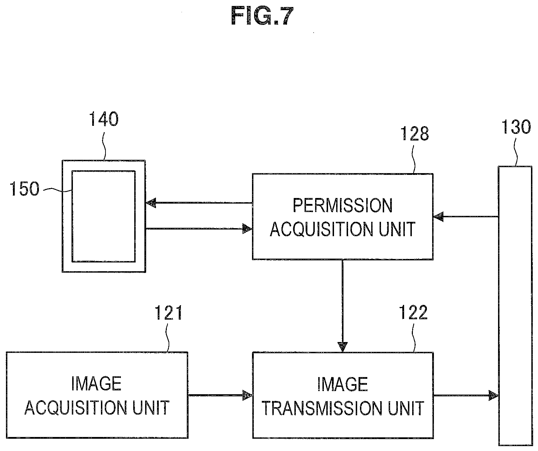

Next, the sixth embodiment of the present disclosure is described with reference to FIG. 7.

FIG. 7 is a block diagram illustrating the schematic functional configuration of parts related to the permission acquisition unit in the content provision terminal according to the sixth embodiment of the present disclosure. In the present embodiment, in addition, the function of a permission acquisition unit 128 is realized by the CPU 120 of the content provision terminal 100, and other components of the content provision terminal 100 than the parts related to the permission acquisition unit 128 are omitted in the figure.

The permission acquisition unit 128 acquires the user's permission with respect to the transmission of a shared image or the publication of a transmitted shared image. In the present embodiment, the permission acquisition unit 128 acquires the permission by presenting information to the user through the output unit 140 and acquiring user's operation through the operation unit 150. For example, the permission acquisition unit 128 may automatically acquire the user's permission when a photographed image is acquired by the image acquisition unit 121, or may acquire an image sharing request transmitted from the user of the content reference terminal 300 to the server 200 through the communication unit 130 and acquire the user's permission in response to this. The permission acquisition unit 128 provides information on the acquired permission to the image transmission unit 122.

The image transmission unit 122 transmits the shared image to the server 200 through the communication unit 130 according to the permission acquired by the permission acquisition unit 128. For example, in a case where the permission acquisition unit 128 acquires the user's permission with respect to the transmission of the shared image, the image transmission unit 122 transmits the photographed image as a shared image when the permission is acquired, and does not transmit the image when the permission is not acquired. Moreover, for example, in a case where the permission acquisition unit 128 acquires the user's permission with respect to the publication of the shared image, the image transmission unit 122 transmits the photographed image to the server 200 as an image that can be shared when the permission is acquired, and transmits the photographed image to the server 200 as an image that is prohibited from being shared when the permission is not acquired. In the latter example, the server 200 functions as an online storage, for example, and, even in a case where the photographed image is not shared, it may be applicable when the user has to transmit the image to the server 200.

As an example of the permission acquisition in the present embodiment, for example, when the image transmission unit 122 starts to acquire a photographed image from the image acquisition unit 121, the permission acquisition unit 128 may output a message to inquire whether the photographed image can be shared with other users, from the output unit 140, and acquire the user's answer to this from the operation unit 150.

Moreover, for example, in a case where information showing that there is an image sharing request from other users through the communication unit 130 with respect to a photographed image transmitted by the image transmission unit 122, the permission acquisition unit 128 may output a message to inquire whether it is possible to publish the image as a shared image, from the output unit 140, and acquire the user's answer with respect to this from the operation unit 150. Here, the image sharing request includes a request in not only a case where an image that is not referred until then is newly referred to but also a case where an image that is referred until then in a small size by a thumbnail or the like is referred to in a larger size.

### (7. Seventh embodiment)

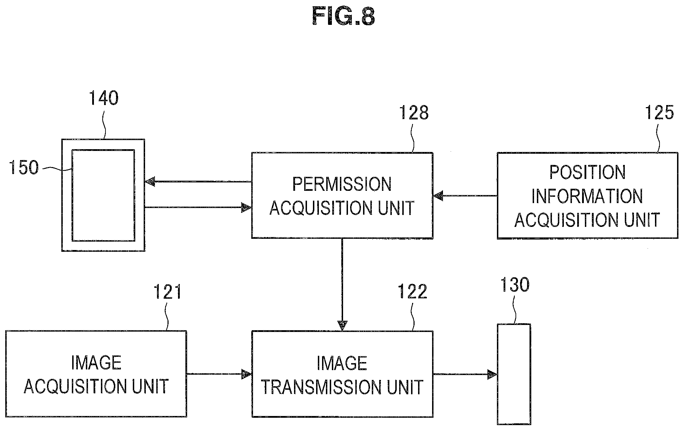

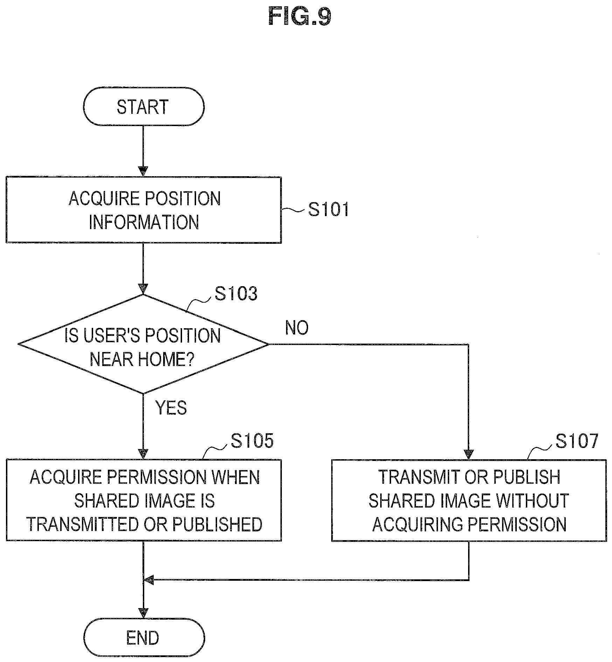

Next, the seventh embodiment of the present disclosure is described with reference to FIGS. 8 and 9.

FIG. 8 is a block diagram illustrating the schematic functional configuration of parts related to the permission acquisition unit in the content provision terminal according to the seventh embodiment of the present disclosure. In the present embodiment, in addition, the functions of the position information acquisition unit 125 and the permission acquisition unit 128 are realized by the CPU 120 of the content provision terminal 100. Here, in the figure, other components of the content provision terminal 100 than the parts related to the position information acquisition unit 125 and the permission acquisition unit 128 are omitted.

Similar to the above-mentioned sixth embodiment, the permission acquisition unit 128 acquires the user's permission with respect to the transmission of a shared image or the publication of a transmitted shared image. In the present embodiment, the permission acquisition unit 128 determines whether to acquire the user's permission for the transmission of a shared image or the publication of a transmitted shared image, on the basis of the position of the user of the content provision terminal 100 which is acquired by the position information acquisition unit 125. To be more specific, for example, the permission acquisition unit 128 acquires the user's permission in a case where the position of the user satisfies a predetermined condition. For example, the permission acquisition unit 128 acquires permission by presenting information to the user through the output unit 140 and acquiring user's operation through the operation unit 150, and provides information on the acquired permission to the image transmission unit 122.

Similar to the above-mentioned sixth embodiment, the image transmission unit 122 transmits the shared image to the server 200 through the communication unit 130 according to the permission acquired by the permission acquisition unit 128.

As an example of the acquisition of permission in the present embodiment, for example, the permission acquisition unit 128 may acquire the user's permission for the transmission or publication of a shared image in a case where the position of the user of the content provision terminal 100 is in a specific area such as user's home, school or office and their periphery. By this means, for example, it is possible to prevent the user of the content provision terminal 100 from unintentionally sharing a private image. For example, the above-mentioned specific area may be a museum, a library or a bookstore. In this case, for example, it is possible to prevent the user of the content provision terminal 100 from publishing an image that infringes on others' copyrights.

In the above-mentioned example, the permission acquisition unit 128 acquires permission by user's operation through the output unit 140 and the operation unit 150, but this process may be automated. That is, it is set beforehand whether the user permits the transmission or publication of a shared image, according to a condition, and, for example, the permission acquisition unit 128 may refer to setting information and determine whether to give permission. In this case, for example, the content provision terminal 100 may be set such that the transmission or publication of the shared image is automatically prohibited in the user's home, school or office or their periphery. Moreover, the content provision terminal 100 may be set such that the transmission or publication of the shared image is automatically prohibited in the museum, the library or the bookstore.

FIG. 9 is a flowchart illustrating an example where user's permission is required to transmit or publish a shared image when the user's position is near home in the seventh embodiment of the present disclosure. As mentioned above, in the present embodiment, various processing variations are possible in addition to the one illustrated in the flowchart.

First, the position information acquisition unit 125 acquires the position of the user of the content provision terminal 100 (step S101). As mentioned above, the acquisition of the position by the position information acquisition unit 125 may be performed in various methods such as positioning using a GPS or a radio base station.

Next, the permission acquisition unit 128 determines whether the acquired position of the user is near home (step S103). Here, in a case where it is determined that the position is near home (which may be a school, an office, a museum, a library or a bookstore), the permission acquisition unit 128 acquires user's permission when a photographed image is transmitted from the image transmission unit 122 as a shared image or when a transmitted shared image is published in the server 200 (step S105).

In this case, for example, the permission acquisition unit 128 may acquire the permission by user's operation through the output unit 140 and the operation unit 150 or determine whether to give permission with reference to setting information.

On the other hand, in a case where it is determined that the position is not near home in step S103, the permission acquisition unit 128 does not acquire the user's permission when a photographed image is transmitted from the image transmission unit 122 as a shared image or when a transmitted shared image is published in the server 200 (step S107). Therefore, even if the user's permission is not given, the shared image may be automatically transmitted and published.

By processing as illustrated in the above flowchart, for example, in a place in which it is estimated that there is a circumstance that the user does not want to transmit or publish a shared image, it is possible to prevent unintentional image publication by acquiring user's permission for the transmission or publication of the shared image. Moreover, in a place in which it is estimated that there is no such circumstance, by not acquiring the user's permission for the transmission or publication of the shared image, it is possible to reduce the complexity of user's operation and easily share a photographed image with other users.

### (8. Eighth embodiment)

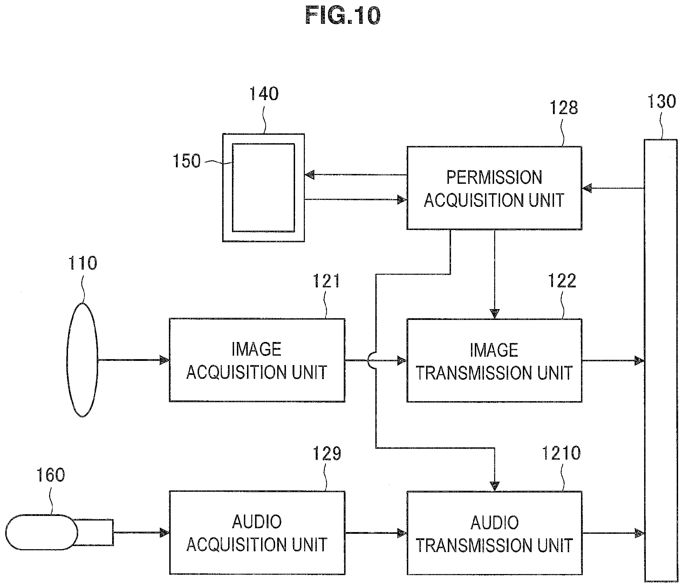

Next, the eighth embodiment of the present disclosure is described with reference to FIG. 10.

FIG. 10 is a block diagram illustrating the schematic functional configuration of parts related to the permission acquisition unit in the content provision terminal according to the eighth embodiment of the present disclosure. In the present embodiment, the content provision terminal 100 further has a microphone 160. Moreover, the functions of the permission acquisition unit 128, audio acquisition unit 129 and audio transmission unit 1210 are realized by the CPU 120 in addition. Here, in the figure, other components of the content provision terminal 100 than the parts related to these components are omitted.

The audio acquisition unit 129 acquires audio attached to an image acquired by the imaging unit 110. In general, what the audio is attached to is a moving image, but the audio may be attached to a still image. To be more specific, the audio acquisition unit 129 acquires audio collected by the microphone 160 installed near the imaging unit 110, and provides it to the audio transmission unit 1210. Here, the audio acquisition unit 129 may continuously acquire audio collected by the microphone 160, or, in a case where the image acquired by the imaging unit 110 is recorded, may acquire audio recorded according thereto.

The audio transmission unit 1210 transmits the audio acquired by the audio acquisition unit 129 as shared audio. To be more specific, the audio transmission unit 1210 transmits the audio acquired by the audio acquisition unit 129 to the server 200 through the communication unit 130. The audio transmitted to the server 200 and a photographed image transmitted at the same time from the image transmission unit 122 can be regenerated in the content reference terminal 300. That is, the audio becomes shared audio between the content provision terminal 100 and the content reference terminal 300 or between the content reference terminals 300.

The permission acquisition unit 128 acquires user's permission with respect to the transmission of a shared image and shared audio or the publication of transmitted shared image and shared audio. In the present embodiment, the permission acquisition unit 128 acquires the permission by presenting information to the user through the output unit 140 and acquiring user's operation through the operation unit 150. Here, the configuration of the permission acquisition unit 128 related to the acquisition of the permission itself can apply the configuration similar to the above-mentioned sixth and seventh embodiments. The permission acquisition unit 128 provides information on the acquired permission to the image transmission unit 122 and the audio transmission unit 1210.

Here, the permission acquisition unit 128 may acquire permission with respect to the transmission or publication of the shared image and permission with respect to the transmission or publication of the shared audio independently. Therefore, for example, the permission acquisition unit 128 can permit the transmission or publication of the shared image while not permitting the transmission or publication of the shared audio. By contrast, the permission acquisition unit 128 can permit the transmission or publication of the shared image while not permitting the transmission or publication of the shared image. Naturally, the permission acquisition unit 128 may collectively permit or prohibit the transmission or publication of both the shared image and the shared audio.

Thus, the setting of permission related to the sharing of images and audio can be set in detail according to the user's necessity. For example, in a case where the user of the content provision terminal 100 stays together with the family or friends and does not want to publish conversation with them while a photographed image may be published, the user can permit only the transmission or publication of the shared image while not permitting the transmission or publication of the shared audio.

Similarly, even regarding the publication of information other than audio attached to the shared image, permission of the transmission or publication may be acquired separately from the shared image. For example, regarding information on the user's position transmitted to the server 200 together with the shared image in the above-mentioned second embodiment, the permission acquisition unit 128 may set whether to permit the transmission or publication separately from the transmission or publication of the shared image.

### (9. Display example when there is request from provider)

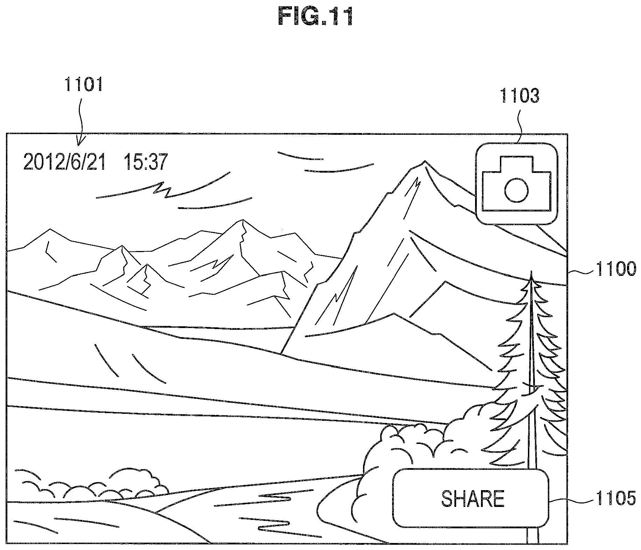

In the following, display examples in a case where the sharing of a photographed image is requested from a content provider are described in an embodiment of the present disclosure with reference to FIGS. 11 to 19. These display examples can be realized by any one of the above-mentioned embodiments or an appropriate combination of multiple ones. The display examples show one display example in an embodiment, and each embodiment is not limited in any way by the following display examples.

FIG. 11 illustrates a display example of the content provision terminal 100 in a case where the sharing of a photographed image is requested from the provider of contents. In the illustrated example, a photographed image (through image) is displayed on a display screen 1100. Moreover, time display 1101, an imaging button 1103 and a sharing button 1105 may be displayed on the display screen 1100.

When the imaging button 1103 is pressed through a touch panel on the display, a displayed photographed image is recorded as a still image. The imaging button 1103 may be displayed for a moving image instead of or together with the still image.

When the sharing button 1105 is pressed through the touch panel, the displayed photographed image is transmitted to the server 200 as a shared image. That is, in the illustrated example, the press of the sharing button 1105 may be interpreted as user's permission with respect to the transmission of the photographed image as the shared image.

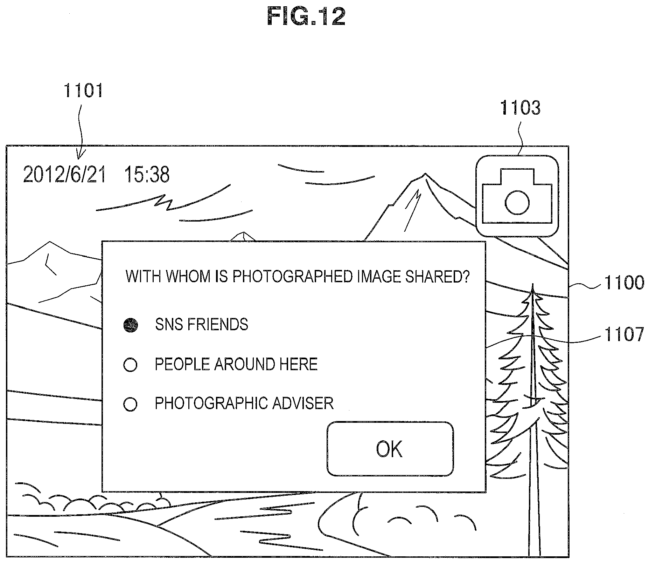

FIG. 12 illustrates a display example when a sharer condition is selected in sharing the photographed image in the example of FIG. 11. For example, in a case where the sharing button 1105 is pressed in the example of FIG. 11, before the photographed image is transmitted to the server 200 as a shared image, a condition selection dialog 1107 may be displayed on the display screen 1100 to inquire sharer conditions to the user.

In the condition selection dialog 1107, three choices are shown as the sharer conditions. The first condition is being an SNS friend. The second condition is being at the periphery of the present location of the user of the content provision terminal 100 (not only being at the present but also being in the past may be taken as a condition). The third condition is being a photographic adviser registered beforehand.

For example, the above-mentioned first condition may be selected in a case where a photographed image of a tourist spot or scenery is shared and enjoyed with an SNS friend in the travel destination or the like. Moreover, the second condition may be selected in a case where a photographed image is shared with people in the land in the travel destination or the like and information on photography spots and tourist spots is requested to be acquired. The third condition may be selected in a case where the photographic adviser is asked to see an actual photographed image to receive advice related to imaging.

### (Example of sharing with SNS friend)

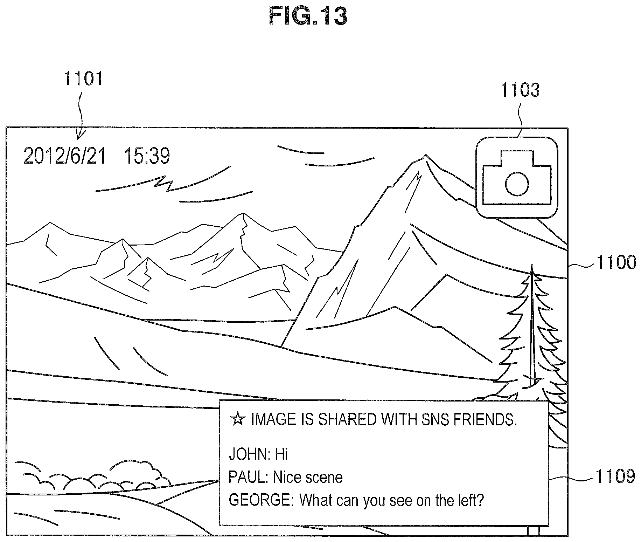

FIG. 13 illustrates a display example in a case where a photographed image is shared with an SNS friend in the example of FIG. 12. In this case, a message log 1109 may be displayed on the display screen 1100. The message log 1109 displays a log of messages exchanged between the user (John) of the content provision terminal 100 and the users of the content reference terminals 300, in this case, SNS friends (Paul and George). Thus, the user of the content provision terminal 100 can take an image while enjoying conversation with the friends.

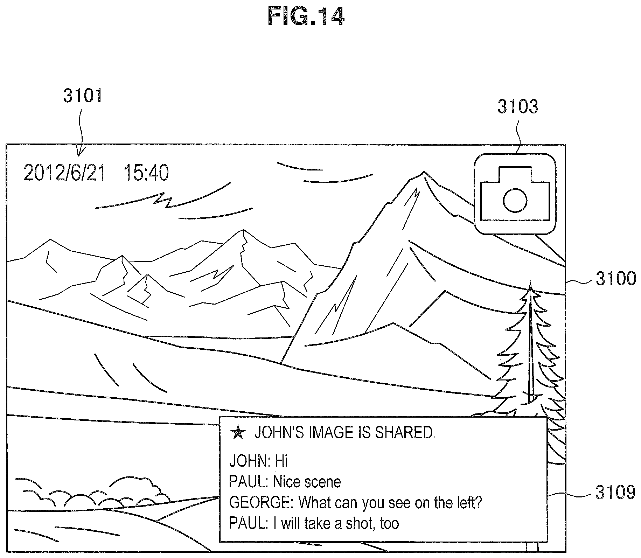

Meanwhile, FIG. 14 illustrates a display example in the content reference terminal 300 in the example of FIG. 13. In a case where a photographed image transmitted from the content provision terminal 100 is shared, the photographed image is displayed even on the content reference terminal 300 similar to the content provision terminal 100. In the illustrated example, the photographed image (through image) similar to the display screen 1100 of the content provision terminal 100 is displayed on a display screen 3100. Moreover, time display 3101 and an imaging button 3103 may be displayed on the display screen 3100. By pressing the imaging button 3103 by the use of a touch panel or the like, the user of the content reference terminal 300 can also record the photographed image.

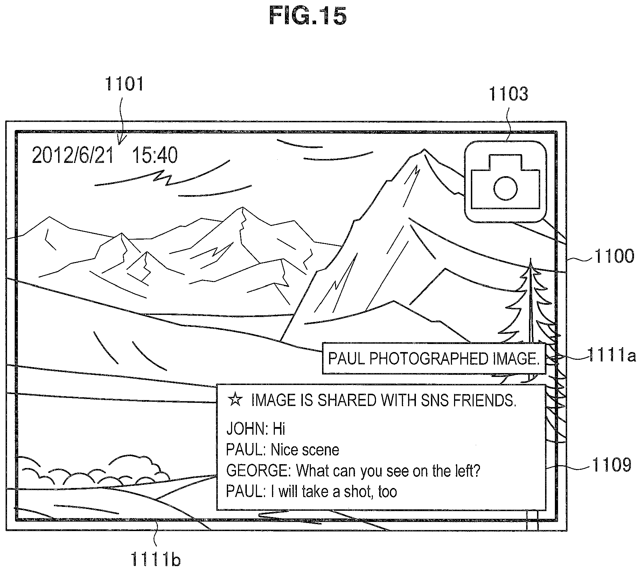

FIG. 15 illustrates a display example in the content provision terminal 100 in a case where imaging is performed in the content reference terminal 300 in the examples of FIGS. 13 and 14. At this time, the user (Paul) who shares the photographed image by the use of the content reference terminal 300 records the photographed image by pressing the imaging button 3103 displayed on the display screen 3100. In the display screen 1100 of the content provision terminal 100, notification display 1111 may be displayed in response to this. For example, the notification display 1111 may be display that notifies which of sharers has recorded the photographed image like notification display 1111a, or may be more intuitive display like notification display 1111b displayed on the periphery of the display screen 1100.

For example, by the notification display 1111a, the user (John) of the content provision terminal 100 can learn that a friend (Paul) who shares the photographed image has recorded the photographed image, and promote conversation. Moreover, for example, by the notification display 1111b, the user (John) of the content provision terminal 100 can learn that it is a good opportunity for a photograph now, and record the photographed image by himself.

### (Example of sharing with those other than friends)

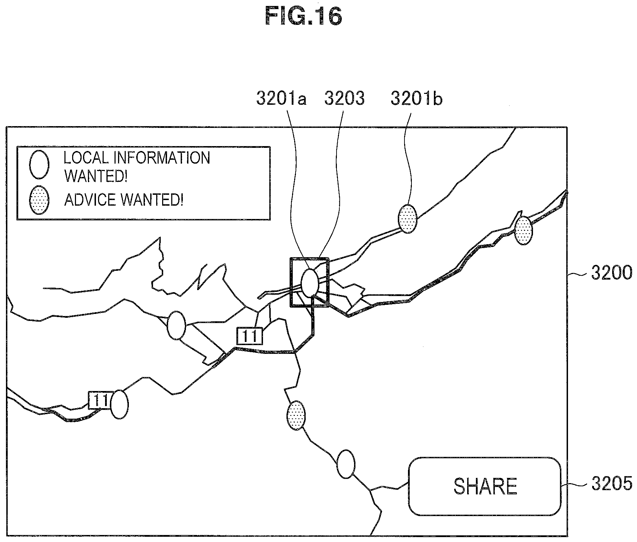

FIG. 16 illustrates a display example in the content reference terminal 300 in a case where a photographed image is shared with a user near the present location or a photographic adviser in the example of FIG. 12. In this case, when the user of the content provision terminal 100 selects "people around here" or "photographic adviser" in the condition selection dialog 1107 in FIG. 12, information on this user is displayed on the content reference terminal 300 that satisfies a condition. That is, the user of the content provision terminal 100 enters a state to request the sharing of the photographed image with a user who satisfies a predetermined condition.

A map is displayed on a display screen 3200 in the illustrated example, and a user who has set "people around here" to a sharer condition is displayed as an icon 3201a of "local information wanted!", and a user who has set "photographic adviser" to a sharer condition is displayed as an icon 3201b of "advice wanted!". For example, the icon 3201a may be displayed for the user of the content reference terminal 300 in a predetermined area associated with the position of a user who requests the sharing of a photographed image or an area within a predetermined distance from the position. Moreover, for example, the icon 3201b may be displayed on the content reference terminal 300 of a photographic adviser registered beforehand in a sharing service of photographed images.

In addition, a selection icon 3203 and a sharing button 3205 are displayed on the display screen 3200. For example, the user of the content reference terminal 300 selects any of icons 3201 by the use of the selection icon 3203 through an operation unit such as a touch panel, and presses the sharing button 3205. By this means, the sharing of a photographed image by the user of the content reference terminal 300 starts with the user of the content provision terminal 100 corresponding to the selected icon 3201.

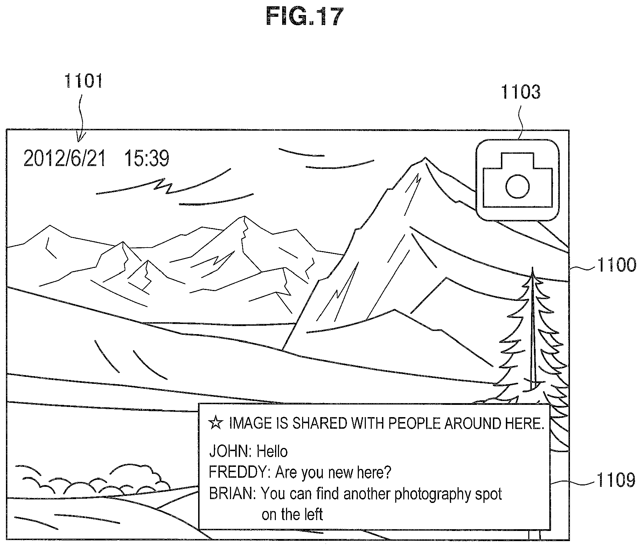

FIG. 17 illustrates a display example of the content provision terminal 100 in a case where a photographed image is shared with a user near the present location in the examples of FIGS. 12 and 16. Also in this case, the message log 1109 may be displayed on the display screen 1100. The message log 1109 displays messages, which are exchanged between the user (John) of the content provision terminal 100 and the users (Freddy and Brian) of the content reference terminals 300 who share the photographed image in response to his request, as a log. Thus, the user of the content provision terminal 100 can acquire information on nearby photography spots and sightseeing spots from the local people, for example.

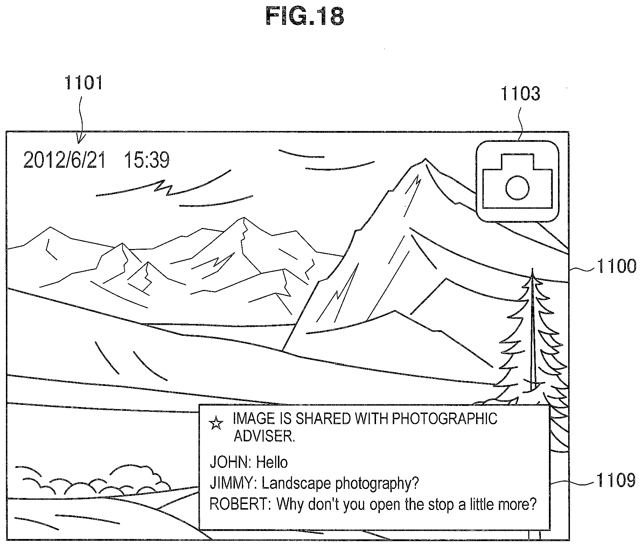

FIG. 18 illustrates a display example of the content provision terminal 100 in a case where a photographed image is shared with the photographic adviser in the examples of FIGS. 12 and 16. Also in this case, the message log 1109 may be displayed on the display screen 1100. The message log 1109 displays messages, which are exchanged between the user (John) of the content provision terminal 100 and photographic advisers (Jimmy and Robert) who share the photographed image by the content reference terminal 300 in response to his request, as a log. Thus, the user of the content provision terminal 100 can acquire information on operation for imaging such as equipment operation from the photographic advisers.

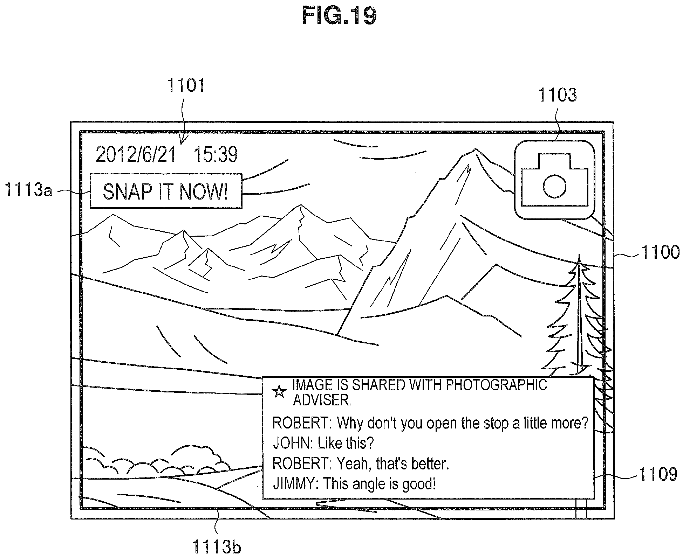

FIG. 19 illustrates a display example of the content provision terminal 100 in a case where the photographing timing is presented from the photographic adviser in the example of FIG. 18. In the content reference terminal 300 of the photographic adviser, for example, a screen like the display screen 3100 illustrated in FIG. 15 is displayed. For example, by pressing a button like the imaging button 3103 displayed on the display screen 3100, the photographic adviser (Jimmy) can present the photographing timing to the user (John) of the content provision terminal 100. Here, in this case, a photographed image does not have to be necessarily recorded on the photographic adviser side.

At this time, notification display 1113 is displayed on the display screen 1100 of the content provision terminal 100. For example, the notification display 1113 may be display by a text like notification display 1113a or may be more intuitive display like notification display 1113b displayed on the periphery of the display screen 1100. By this means, the user of the content provision terminal 100 can learn that it is a good opportunity for a photograph now, and record a photographed image without missing it.

### (10. Display example by request from referring person)

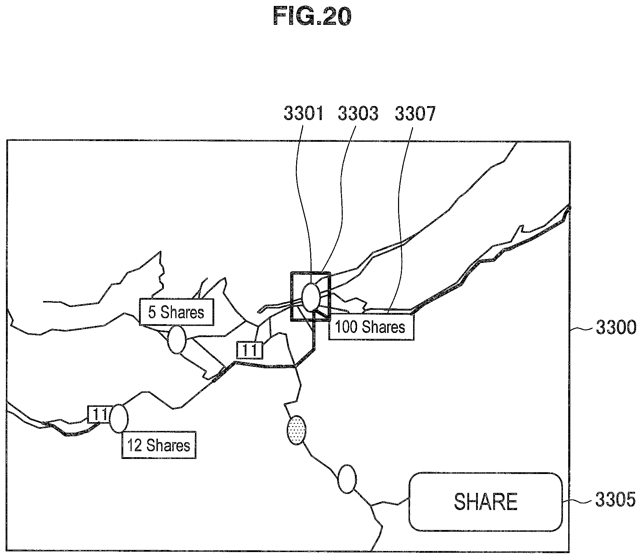

In the following, display examples in a case where the sharing of a photographed image is requested from a content referring person in an embodiment of the present disclosure are described with reference to FIGS. 20 to 23. These display examples can be realized by any one of the above-mentioned embodiments or an appropriate combination of multiple ones. The display examples show one display example in an embodiment, and each embodiment is not limited in any way by the following display examples.

FIG. 20 illustrates a display example of the content reference terminal 300 in a case where the sharing of a photographed image is requested from a referring person of contents. In the illustrated example, a map is displayed on a display screen 3300, and a user who can share the photographed image is displayed on the map as an icon 3301.

For example, the icon 3301 may be displayed in a case where there is a possibility that the user of the content provision terminal 100 shares a photographed image under some conditions that a friend requests the sharing and that there is no problem if an object of the photographed image is shared. Whether to actually share the photographed image may be determined after the sharing is requested by the user of the content reference terminal 300, or the determination may be automatically performed according to a preset condition and the sharing may be automatically started in a case where the sharing is permitted.

In addition, a selection icon 3303, a sharing button 3305 and sharing person number display 3307 may be displayed on the display screen 3300. For example, the user of the content reference terminal 300 selects any of icons 3301 by the use of the selection icon 3303 through an operation unit such as a touch panel, and presses the sharing button 3305. By this means, a request for the sharing of a photographed image is transmitted to the user of the content provision terminal 100 corresponding to the selected icon 3301.

Here, the sharing person number display 3307 shows how many users share a photographed image transmitted from the content provision terminal 100 corresponding to the icon 3301. For example, by the sharing person number display 3307, the user of the content reference terminal 300 can select a photographed image that is shared by many users and transmitted from a more popular place, as a sharing target. Moreover, by contrast, by the sharing person number display 3307, the user of the content reference terminal 300 may select a photographed image that is shared by few users and facilitates communication with the user of the content provision terminal 100, as a sharing target.

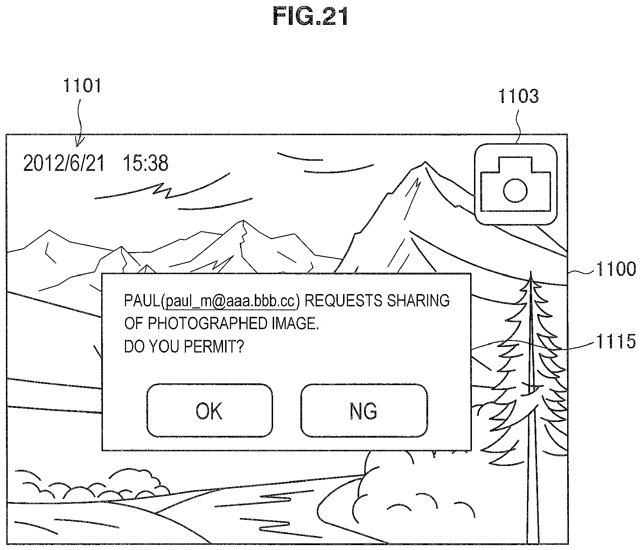

FIG. 21 illustrates a display example in the content provision terminal 100 in a case where the sharing of a photographed image is requested by the user of the content reference terminal 300 in the example of FIG. 20. At this time, a sharing permission confirmation dialog 1115 is displayed on the display screen 1100. For example, information to identify a user who requests the sharing may be displayed on the sharing permission confirmation dialog 1115. In the illustrated example, name "Paul" of the user who requests the sharing and the email address are displayed on the sharing permission confirmation dialog 1115. For example, the user name or the like in an SNS may be displayed instead of or together with these items of information.

For example, by pressing the "OK" button displayed on the sharing permission confirmation dialog 1115 through an operation unit such as a touch panel, the user of the content provision terminal 100 can give permission to the request for the sharing of the photographed image. Moreover, by pressing the "NG" button displayed on the sharing permission confirmation dialog 1115, the user of the content provision terminal 100 can refuse the request for the sharing.

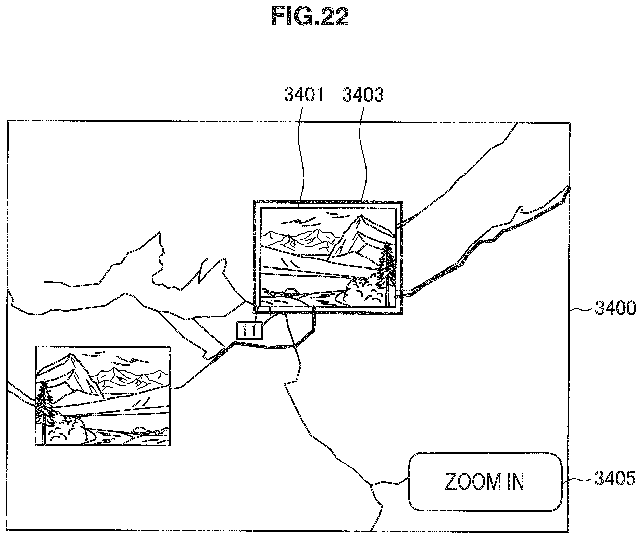

FIG. 22 illustrates another display example of the content reference terminal 300 in a case where the sharing of a photographed image is requested from a referring person of contents. In the illustrated example, a map is displayed on a display screen 3400, and a photographed image transmitted from the content provision terminal 100 is displayed on the map as a reduction image 3401.

For example, the reduction image 3401 may be displayed when the user of the content provision terminal 100 give permission to share a photographed image in a state where it is reduced. Multiple reduction images 3401 may be displayed on the map of the display screen 3400. In this case, the reduction images 3401 may function as thumbnail images that display a list of images taken in various places in an area shown by the map.

In addition, a selection icon 3403 and a zoom-in button 3405 may be displayed on the display screen 3400. For example, the user of the content reference terminal 300 selects any of reduction images 3401 by the use of the selection icon 3303 through an operation unit such as a touch panel, and presses the zoom-in button 3405. By this means, a request for enlarged display of a shared photographed image is transmitted to the user of the content provision terminal 100 that transmits the selected reduction image 3401 as the shared image.

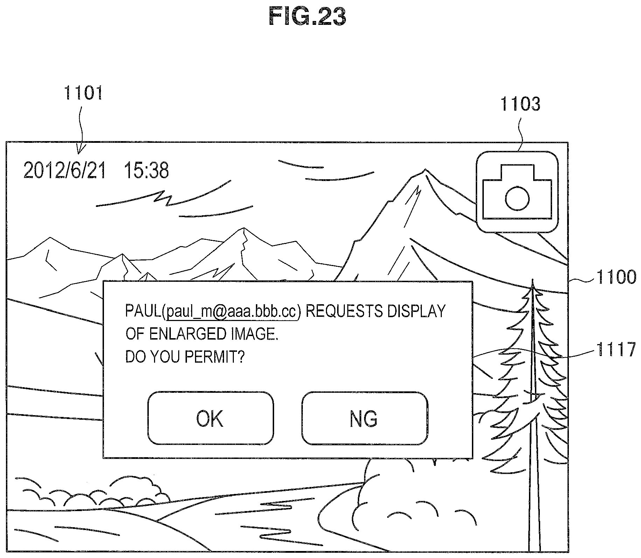

FIG. 23 illustrates a display example in the content provision terminal 100 in a case where the enlarged display of the shared image is requested by the user of the content reference terminal 300 in the example of FIG. 22. At this time, an enlargement permission confirmation dialog 1117 is displayed on the display screen 1100. For example, information to identify a user who requests the enlarged display of a photographed image may be displayed on the enlargement permission confirmation dialog 1117. In the illustrated example, name "Paul" of the user who requests the enlarged display and the email address are displayed on the enlargement permission confirmation dialog 1117. For example, the user name or the like in an SNS may be displayed instead of or together with these items of information.

For example, by pressing the "OK" button displayed on the enlargement permission confirmation dialog 1117 through an operation unit such as a touch panel, the user of the content provision terminal 100 can give permission to the request for the enlarged display of the photographed image. Moreover, by pressing the "NG" button displayed on the enlargement permission confirmation dialog 1117, the user of the content provision terminal 100 can refuse the request for the enlarged display.

Thus, by acquiring permission of the user of the content provision terminal 100 in response to a request of a size change of a shared image, it is possible to share a photographed image within a range of no problem, even in a case where there is no problem in sharing a reduced photographed image but the user does not want to share an enlarged photographed image from the viewpoint of privacy or the like.

### (11. Other display examples)

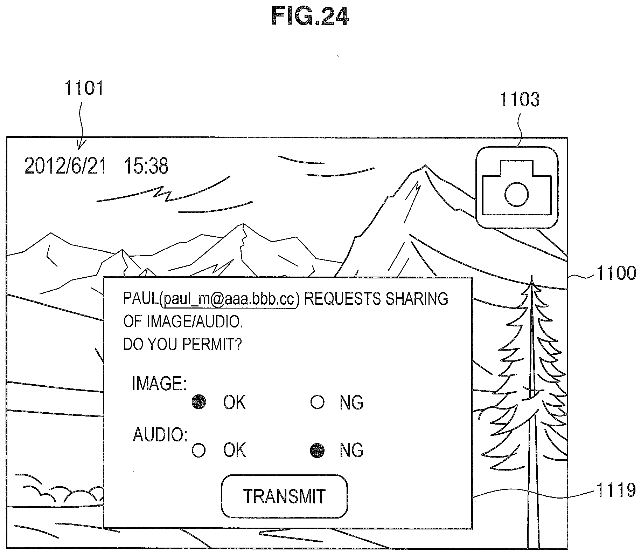

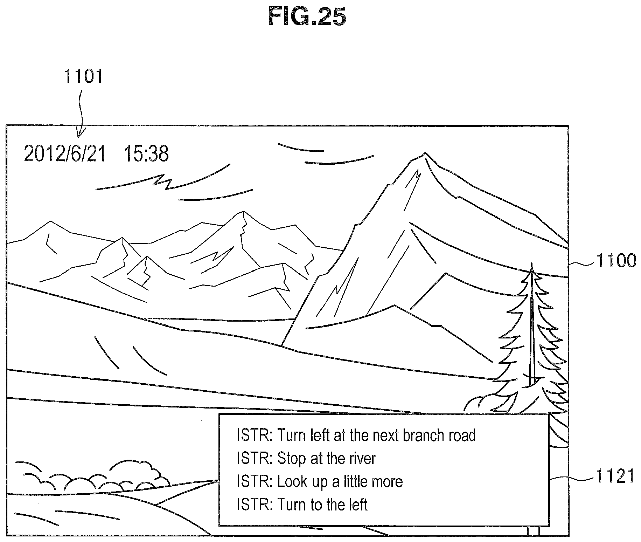

In the following, other display examples in an embodiment of the present disclosure are described with reference to FIGS. 24 and 25. These display examples can be realized by any one of the above-mentioned embodiments or an appropriate combination of multiple ones. The display examples show one display example in an embodiment, and each embodiment is not limited in any way by the following display examples.

FIG. 24 illustrates a display example of the content provision terminal 100 in a case where permission for sharing can be independently set to the image and audio of a photographed image. In the illustrated example, a permission confirmation dialog 1119 is displayed on the display screen 1100. Similar to other above-mentioned examples, information to identify a user who requests the sharing is displayed on the permission confirmation dialog 1119. Icons (two pairs of radio buttons in the illustrated example) to set whether to permit the sharing or not are displayed with respect to each of the image and the audio on the permission confirmation dialog 1119.

For example, by pressing the "transmission" button displayed on the permission confirmation dialog 1119 in a state where the permission or refusal for the sharing of each of the image and the audio is set, the user of the content provision terminal 100 can transmit the specified permission state to the server 200. In the illustrated example, it is possible to specify four permission states of "the sharing of the image and the audio is permitted", "the sharing of the image is permitted and the sharing of the audio is refused", "the sharing of the image is refused and the sharing of the audio is permitted" and "the sharing of the image and the audio is refused".

In the above-mentioned example, the permission for the sharing of the image and the audio does not necessarily have to be able to be independently set at all. For example, the permission for the sharing of the audio may be possible only in a case where the sharing of the image is permitted (that is, the setting may be performed such that the sharing of only the audio is not permitted).

FIG. 25 illustrates a display example in a case where instruction information to move the visual field of the user of the content provision terminal 100 is acquired by the sharing of a photographed image. In the illustrated example, an instruction information log 1121 is displayed on the display screen 1100. The instruction information log 1121 is similar to the message log 1109 in above-mentioned other examples, but what is displayed here may be information that instructs movement by user's walking or a change in the eye direction, which is given from other users (indicators) who share a photographed image.

As mentioned above, the content provision terminal 100 may be an HMD, for example. In this case, an imaging apparatus mounted to the HMD may acquire the visual field image of the user who wears the HMD. By sharing this image with other users, for example, it is possible to guide the user who wears the HMD, or turn his/her eyes to an instructed direction and project what the sharer wants to a photographed image. Here, the visual field image of the user can be acquired by not only the imaging apparatus mounted to the HMD but also a digital camera, for example.

### (12. Hardware configuration)

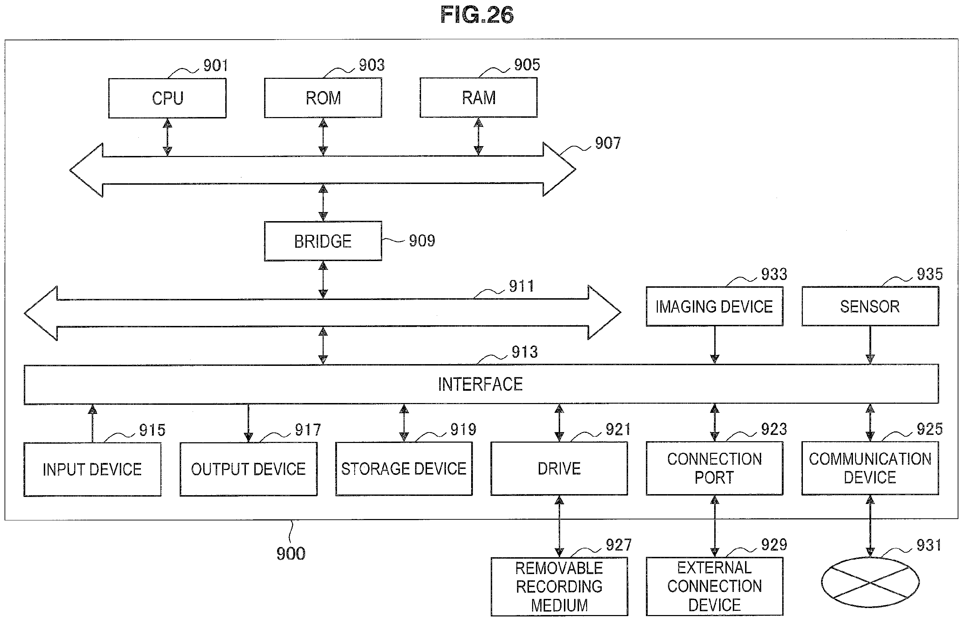

Next, the hardware configuration of an information processing apparatus according to an embodiment of the present disclosure is described with reference to FIG. 26. FIG. 26 is a block diagram to describe the hardware configuration of the information processing apparatus. For example, an illustrated information processing apparatus 900 may realize the content provision terminal 100, the server apparatus forming the server 200, and the content reference terminal 300, in the above-mentioned embodiments.

The information processing apparatus 900 includes a CPU (Central Processing Unit) 901, a ROM (Read Only Memory) 903, and a RAM (Random Access Memory) 905. In addition, the information processing apparatus 900 may include a host bus 907, a bridge 909, an external bus 911, an interface 913, an input device 915, an output device 917, a storage device 919, a drive 921, a connection port 923, and a communication device 925. Further, the information processing apparatus 900 may include an imaging device 933 and a sensor 935 as necessary. The information processing apparatus 900 may include a processing circuit such as a DSP (Digital Signal Processor), alternatively or in addition to the CPU 901.

The CPU 901 serves as an operation processor and a controller, and controls all or some operations in the information processing apparatus 900 in accordance with various programs recorded in the ROM 903, the RAM 905, the storage device 919 or a removable recording medium 927. The ROM 903 stores programs and operation parameters which are used by the CPU 901. The RAM 905 temporarily stores program which are used in the execution of the CPU 901 and parameters which are appropriately modified in the execution. The CPU 901, ROM 903, and RAM 905 are connected to each other by the host bus 907 configured to include an internal bus such as a CPU bus. In addition, the host bus 907 is connected to the external bus 911 such as a PCI (Peripheral Component Interconnect/Interface) bus via the bridge 909.

The input device 915 is a device which is operated by a user, such as a mouse, a keyboard, a touch panel, buttons, switches and a lever. The input device 915 may be, for example, a remote control unit using infrared light or other radio waves, or may be an external connection device 929 such as a portable phone operable in response to the operation of the information processing apparatus 900. Furthermore, the input device 915 includes an input control circuit which generates an input signal on the basis of the information which is input by a user and outputs the input signal to the CPU 901. By operating the input device 915, a user can input various types of data to the information processing apparatus 900 or issue instructions for causing the information processing apparatus 900 to perform a processing operation.

The output device 917 includes a device capable of visually or audibly notifying the user of acquired information. The output device 917 may include a display device such as an LCD (Liquid Crystal Display), a PDP (Plasma Display Panel), and an organic EL (Electro-Luminescence) displays, an audio output device such as a speaker or a headphone, and a peripheral device such as a printer. The output device 917 may output the results obtained from the process of the information processing apparatus 900 in a form of a video such as text or an image, and an audio such as voice or sound.

The storage device 919 is a device for data storage which is configured as an example of a storage unit of the information processing apparatus 900. The storage device 919 includes, for example, a magnetic storage device such as a HDD (Hard Disk Drive), a semiconductor storage device, an optical storage device, or a magneto-optical storage device. The storage device 919 stores programs to be executed by the CPU 901, various data, and data obtained from the outside.

The drive 921 is a reader/writer for the removable recording medium 927 such as a magnetic disk, an optical disk, a magneto-optical disk, or a semiconductor memory, and is embedded in the information processing apparatus 900 or attached externally thereto. The drive 921 reads information recorded in the removable recording medium 927 attached thereto, and outputs the read information to the RAM 905. Further, the drive 921 writes in the removable recording medium 927 attached thereto.

The connection port 923 is a port used to directly connect devices to the information processing apparatus 900. The connection port 923 may include a USB (Universal Serial Bus) port, an IEEE1394 port, and a SCSI (Small Computer System Interface) port. The connection port 923 may further include an RS-232C port, an optical audio terminal, an HDMI (High-Definition Multimedia Interface) port, and so on. The connection of the external connection device 929 to the connection port 923 makes it possible to exchange various data between the information processing apparatus 900 and the external connection device 929.

The communication device 925 is, for example, a communication interface including a communication device or the like for connection to a communication network 931. The communication device 925 may be, for example, a communication card for a wired or wireless LAN (Local Area Network), Bluetooth (registered trademark), WUSB (Wireless USB) or the like. In addition, the communication device 925 may be a router for optical communication, a router for ADSL (Asymmetric Digital Subscriber Line), a modem for various kinds of communications, or the like. The communication device 925 can transmit and receive signals to and from, for example, the Internet or other communication devices based on a predetermined protocol such as TCP/IP. In addition, the communication network 931 connected to the communication device 925 may be a network or the like connected in a wired or wireless manner, and may be, for example, the Internet, a home LAN, infrared communication, radio wave communication, satellite communication, or the like.

The imaging device 933 is a device that generates an image by imaging a real space using an image sensor such as a charge-coupled device (CCD) or a complementary metal-oxide-semiconductor (CMOS) sensor, as well as various members such as one or more lenses for controlling the formation of a subject image on the image sensor, for example. The imaging device 933 may be a device that takes still images, and may also be a device that takes moving images.

The sensor 935 is any of various sensors such as an acceleration sensor, a gyro sensor, a geomagnetic sensor, an optical sensor, or a sound sensor, for example. The sensor 935 acquires information regarding the state of the information processing apparatus 900, such as the orientation of the case of the information processing apparatus 900, as well as information regarding the environment surrounding the information processing apparatus 900, such as the brightness or noise surrounding the information processing apparatus 900, for example. The sensor 935 may also include a Global Positioning System (GPS) sensor that receives GPS signals and measures the latitude, longitude, and altitude of the apparatus.

The foregoing thus illustrates an exemplary hardware configuration of the information processing apparatus 900. Each of the above components may be realized using general-purpose members, but may also be realized in hardware specialized in the function of each component. Such a configuration may also be modified as appropriate according to the technological level at the time of the implementation.

### (13. Supplementation)

In the above-mentioned embodiments, a case has been mainly described where a photographed image is shared between normal users, but the embodiments of the present disclosure are not limited to this. For example, the embodiment of the present disclosure may be applied to a case where an image taken by a famous person in the dressing room or the like is distributed as contents for business or promotion.

The preferred embodiments of the present invention have been described above with reference to the accompanying drawings, whilst the present invention is not limited to the above examples, of course.

### Reference Signs List

- 10: system
- 100: content provision terminal
- 110: imaging unit
- 121: image acquisition unit
- 122: image transmission unit
- 123: instruction information reception unit
- 124: instruction information output unit
- 125: position information acquisition unit
- 126: condition information generation unit
- 127: imaging preparation state determination unit
- 128: permission acquisition unit
- 129: audio acquisition unit
- 1210: audio transmission unit
- 130: communication unit
- 140: output unit
- 150: operation unit
- 160: microphone
- 200: server
- 300: content reference terminal
- 400: network

## Claims

1. An information processing system configured to establish bidirectional communication, comprising:
a content reference terminal (300) used by a first user;
a server (200) configured to distribute a shared image to the content reference terminal (300);
a content provision terminal (100) used by a second user, including:
an image acquisition unit (121) configured to acquire a through image;
an image transmission unit (122) configured to transmit the through image as the shared image to the server (200);
an instruction information reception unit (123) configured to receive, from the server (200) instruction information on operation of the second user who performs imaging, the instruction information being input as a response by the first user referring to the shared image;
an instruction information output unit (124) configured to output the instruction information to the second user, wherein the instruction information reception unit (123) receives instruction information that indicates to record the through image to the second user;
a permission acquisition unit (128) configured to acquire permission of the second user with respect to transmission of the shared image to the server (200) or publication of the transmitted shared image in the server (200); and
a position information acquisition unit (125) configured to acquire information on a position of the second user,
wherein, when the position of the second user satisfies a predetermined condition, the permission acquisition unit (128) is further configured to acquire the permission of the second user.

2. The information processing system according to claim 1, further comprising:
a condition information generation unit (126) configured to generate sharing condition information showing a condition of a sharer of the shared image,
wherein the image transmission unit (122) is further configured to transmit the sharing condition information together with the shared image.

3. The information processing system according to claim 2,
wherein the condition information generation unit (126) is further configured to generate the sharing condition information based on the position of the second user,
wherein the condition information generation unit (126) is further configured to set association with an area including the position of the second user as the condition of the sharer.

4. The information processing system according to claim 2 or 3, wherein the condition information generation unit (126) is further configured to generate the sharing condition information based on setting operation of the second user,
wherein the condition information generation unit (126) is further configured to set a friendship with the first user in a social network service, as the condition of the sharer.

5. The information processing system according to claim 1, wherein the image transmission unit (122) is further configured to transmit the information on the position together with the shared image.

6. The information processing system according to any one of claims 1 to 5, further comprising:
an imaging preparation state determination unit (127) configured to determine whether the second user is in a record preparation state of the through image,
wherein the image acquisition unit (121) is further configured to acquire the through image acquired before or after a record of a photographed image, and
wherein, when the second user is in the record preparation state, the image transmission unit (122) is further configured to transmit the through image as the shared image.

7. The information processing system according to claim 1, wherein the permission acquisition unit (128) is further configured to acquire the permission of the second user in response to a request from a sharer of the transmitted shared image.

8. The information processing system according to claim 7,
wherein the permission acquisition unit (128) is further configured to acquire the permission of the second user in response to a request of a size change of the shared image from the sharer.

9. The information processing system according to any one of claims 1 to 8, further comprising:
an audio acquisition unit (129) configured to acquire audio attached to the through image; and
an audio transmission unit (1210) configured to transmit, to the server (200) the audio as shared audio, wherein
the permission acquisition unit (128) is further configured to acquire permission of the user with respect to transmission of the shared image and die shared audio or publication of the transmitted shared image and the transmitted shared audio, for each of the shared image and the shared audio independendy.

10. The information processing system according to any one of claims 1 to 9,
wherein the second user performs the imaging using an imaging apparatus that acquires a visual field image of the second user, and
wherein the instruction information reception unit (123) is further configured to receive instruction information on operation to move the second user or the visual field of the second user.

11. The information processing system according to any one of claims 1 to 10, wherein the image acquisition unit (121) is further configured to acquire the through image that does not include the second user.

12. An information processing method for the information processing system of claim 1 comprising:
acquiring a through image;
transmitting the through image as a shared image to the server (200);
receiving, from the server (200), instruction information on operation of the second user who performs imaging, the instruction information being input as a response by the first user referring to the shared image; and
outputting the instruction information to the second user, wherein the instruction information indicates to record the through image to the second user;
acquiring permission of the second user with respect to transmission of the shared image to the server (200) or publication of the shared image in die server (200);
acquiring information on a position of the second user; and
when the position of the second user satisfies a predetermined condition, acquiring the permission of the second user.

13. A program for causing a computer to establish bidirectional communication and to realize the method of claim 12.

## Patentansprüche

1. Informationsverarbeitungssystem, das dazu ausgelegt ist, bidirektionale Kommunikation herzustellen, Folgendes umfassend:
ein von einem ersten Benutzer verwendetes Inhaltsreferenz-Endgerät (300);
einen Server (200), der dazu ausgelegt ist, ein freigegebenes Bild zu dem Inhaltsreferenz-Endgerät (300) zu verteilen;
ein von einem zweiten Benutzer verwendetes Inhaltsbereitstellungs-Endgerät (100), Folgendes umfassend:
eine Bilderfassungseinheit (121), die dazu ausgelegt ist, ein Durchgangsbild zu erfassen;
eine Bildübertragungseinheit (122), die dazu ausgelegt ist, das Durchgangsbild als das freigegebene Bild zu dem Server (200) zu übertragen;
eine Anweisungsinformations-Empfangseinheit (123), die dazu ausgelegt ist, von dem Server (200) Anweisungsinformationen über den Betrieb des zweiten Benutzers, der Bilderzeugung durchführt, zu empfangen, wobei die Anweisungsinformationen als Antwort durch den ersten Benutzer unter Bezugnahme auf das freigegebene Bild eingegeben werden;
eine Anweisungsinformations-Ausgabeeinheit (124), die dazu ausgelegt ist, die Anweisungsinformationen an den zweiten Benutzer auszugeben,
wobei die Anweisungsinformations-Empfangseinheit (123) Anweisungsinformationen empfängt, die angeben, das Durchgangsbild zu dem zweiten Benutzer aufzuzeichnen;
eine Erlaubniserwerbungseinheit (128), die dazu ausgelegt ist, eine Erlaubnis des zweiten Benutzers in Bezug auf die Übertragung des freigegebenen Bilds zu dem Server (200) oder die Veröffentlichung des übertragenen freigegebenen Bilds in dem Server (200) zu erwerben; und
eine Positionsinformations-Erfassungseinheit (125), die dazu ausgelegt ist, Informationen über eine Position des zweiten Benutzers zu erfassen,
wobei, wenn die Position des zweiten Benutzers eine vorbestimmte Bedingung erfüllt, die Erlaubniserwerbungseinheit (128) ferner dazu ausgelegt ist, die Erlaubnis des zweiten Benutzers zu erwerben.

2. Informationsverarbeitungssystem gemäß Anspruch 1, das ferner Folgendes umfasst:
eine Bedingungsinformations-Erzeugungseinheit (126), die dazu ausgelegt ist, Freigabebedingungsinformationen zu erzeugen, die eine Bedingung eines Sharers des freigegebenen Bilds zeigt,
wobei die Bildübertragungseinheit (122) ferner dazu ausgelegt ist, die Freigabebedingungsinformationen zusammen mit dem freigegebenen Bild zu übertragen.

3. Informationsverarbeitungssystem gemäß Anspruch 2,
wobei die Bedingungsinformations-Erzeugungseinheit (126) ferner dazu ausgelegt ist, die Freigabebedingungsinformationen auf der Basis der Position des zweiten Benutzers zu erzeugen,
wobei die Bedingungsinformations-Erzeugungseinheit (126) ferner dazu ausgelegt ist, als die Bedingung des Sharers eine Verbindung mit einem Bereich festzulegen, der die Position des zweiten Benutzers einschließt.

4. Informationsverarbeitungssystem gemäß Anspruch 2 oder 3,
wobei die Bedingungsinformations-Erzeugungseinheit (126) ferner dazu ausgelegt ist, die Freigabebedingungsinformationen auf der Basis des Festlegens des Betriebs des zweiten Benutzers zu erzeugen,
wobei die Bedingungsinformations-Erzeugungseinheit (126) ferner dazu ausgelegt ist, eine Freundschaft mit dem ersten Benutzer in einem Sozialnetzwerkdienst als die Bedingung des Sharers einzurichten.

5. Informationsverarbeitungssystem gemäß Anspruch 1,
wobei die Bildübertragungseinheit (122) ferner dazu ausgelegt ist, die Informationen über die Position zusammen mit dem freigegebenen Bild zu übertragen.

6. Informationsverarbeitungssystem gemäß einem der Ansprüche 1 bis 5, das ferner Folgendes umfasst:
eine Bilderzeugungs-Vorbereitungszustands-Bestimmungseinheit (127), die dazu ausgelegt ist, zu bestimmen, ob sich der zweite Benutzer in einem Aufzeichnungsvorbereitungszustand des Durchgangsbilds befindet,
wobei die Bilderfassungseinheit (121) ferner dazu ausgelegt ist, das vor oder nach einer Aufzeichnung eines fotografierten Bilds erfasste Durchgangsbild zu erfassen, und
wobei, wenn der zweite Benutzer sich in dem Aufzeichnungsvorbereitungszustand befindet, die Bildübertragungseinheit (122) ferner dazu ausgelegt ist, das Durchgangsbild als das freigegebene Bild zu übertragen.

7. Informationsverarbeitungssystem gemäß Anspruch 1,
wobei die Erlaubniserwerbungseinheit (128) ferner dazu ausgelegt ist, die Erlaubnis des zweiten Benutzers in Reaktion auf eine Anfrage von einem Sharer des übertragenen freigegebenen Bilds zu erwerben.

8. Informationsverarbeitungssystem gemäß Anspruch 7,
wobei die Erlaubniserwerbungseinheit (128) ferner dazu ausgelegt ist, die Erlaubnis des zweiten Benutzers in Reaktion auf eine Anfrage einer Größenänderung des freigegebenen Bilds von dem Sharer zu erwerben.

9. Informationsverarbeitungssystem gemäß einem der Ansprüche 1 bis 8, das ferner Folgendes umfasst:
eine Tonerfassungseinheit (129), die dazu ausgelegt ist, an das Durchgangsbild angehängten Ton zu erfassen; und
eine Tonübertragungseinheit (1210), die dazu ausgelegt ist, den Ton als freigegebenen Ton zu dem Server (200) zu übertragen,
wobei die Erlaubniserwerbungseinheit (128) ferner dazu ausgelegt ist, eine Erlaubnis des Benutzers in Bezug auf die Übertragung des freigegebenen Bilds und des freigegebenen Tons oder die Veröffentlichung des übertragenen freigegebenen Bilds und des übertragenen freigegebenen Tons jeweils unabhängig für das freigegebene Bild und den freigegebenen Ton zu erwerben.

10. Informationsverarbeitungssystem gemäß einem der Ansprüche 1 bis 9,
wobei der zweite Benutzer die Bilderzeugung mit Hilfe einer Bilderzeugungsvorrichtung durchführt, die ein Sichtfeldbild des zweiten Benutzers erfasst, und
wobei die Anweisungsinformations-Empfangseinheit (123) ferner dazu ausgelegt ist, Anweisungsinformationen über den Betrieb zu empfangen, um den zweiten Benutzer oder das Sichtfeld des zweiten Benutzers zu verschieben.

11. Informationsverarbeitungssystem gemäß einem der Ansprüche 1 bis 10,
wobei die Bilderfassungseinheit (121) ferner dazu ausgelegt ist, das Durchgangsbild, das nicht den zweiten Benutzer einschließt, zu erfassen.

12. Informationsverarbeitungsverfahren für das Informationsverarbeitungssystem nach Anspruch 1, Folgendes umfassend:
Erfassen eines Durchgangsbilds;
Übertragen des Durchgangsbilds als ein freigegebenes Bild zu dem Server (200);
Empfangen, von dem Server (200), von Anweisungsinformationen über den Betrieb des zweiten Benutzers, der Bilderzeugung durchführt, wobei die Anweisungsinformationen als Antwort durch den ersten Benutzer unter Bezugnahme auf das freigegebene Bild eingegeben werden; und
Ausgeben der Anweisungsinformationen an den zweiten Benutzer,
wobei die Anweisungsinformationen angeben, das Durchgangsbild zu dem zweiten Benutzer aufzuzeichnen;
Erwerben einer Erlaubnis des zweiten Benutzers in Bezug auf die Übertragung des freigegebenen Bilds zu dem Server (200) oder die Veröffentlichung des übertragenen freigegebenen Bilds in dem Server (200);
Erfassen von Informationen über eine Position des zweiten Benutzers; und
wenn die Position des zweiten Benutzers eine vorbestimmte Bedingung erfüllt, Erwerben der Erlaubnis des zweiten Benutzers.

13. Programm zum Veranlassen eines Computers, bidirektionale Kommunikation herzustellen und das Verfahren nach Anspruch 12 zu realisieren.

## Revendications

1. Système de traitement d'informations, configuré pour établir une communication bidirectionnelle, comprenant :
un terminal de référence de contenu (300), utilisé par un premier utilisateur ;
un serveur (200), configuré pour distribuer une image partagée au terminal de référence de contenu (300) ;
un terminal de fourniture de contenu (100), utilisé par un second utilisateur et comprenant :
une unité d'acquisition d'image (121), configurée pour acquérir une image passante ;
une unité de transmission d'image (122), configurée pour transmettre au serveur (200) l'image passante en tant que l'image partagée ;
une unité de réception d'information d'instruction (123), configurée pour recevoir, en provenance du serveur (200), une information d'instruction sur une opération du second utilisateur qui effectue une imagerie, l'information d'instruction étant entrée en tant que réponse par le premier utilisateur en référence à l'image partagée ;
une unité d'émission d'information d'instruction (124), configurée pour émettre l'information d'instruction vers le second utilisateur, l'unité de réception d'information d'instruction (123) recevant l'information d'instruction qui indique qu'il faut enregistrer l'image passante pour le second utilisateur ;
une unité d'acquisition d'autorisation (128), configurée pour acquérir une autorisation du second utilisateur par rapport à une transmission de l'image partagée au serveur (200) ou à une publication sur le serveur (200) de l'image partagée transmise ; et
une unité d'acquisition d'information de position (125), configurée pour acquérir une information sur une position du second utilisateur,
l'unité d'acquisition d'autorisation (128) étant en outre configurée pour acquérir l'autorisation du second utilisateur quand la position du second utilisateur satisfait à une condition prédéterminée.

2. Système de traitement d'informations selon la revendication 1, comprenant en outre :
une unité de génération d'information de condition (126), configurée pour générer une information de condition de partage montrant une condition d'un partageur de l'image partagée,
l'unité de transmission d'image (122) étant en outre configurée pour transmettre l'information de condition de partage conjointement avec l'image partagée.

3. Système de traitement d'informations selon la revendication 2,
dans lequel l'unité de génération d'information de condition (126) est en outre configurée pour générer l'information de condition de partage sur la base de la position du second utilisateur,
l'unité de génération d'information de condition (126) étant en outre configurée pour définir, en tant que condition du partageur, une association avec une région incluant la position du second utilisateur.

4. Système de traitement d'informations selon la revendication 2 ou 3, dans lequel l'unité de génération d'information de condition (126) est en outre configurée pour générer l'information de condition de partage sur la base de la définition d'une opération du second utilisateur,
l'unité de génération d'information de condition (126) étant en outre configurée pour définir, en tant que la condition du partageur, une amitié avec le premier utilisateur dans un service de réseau social.

5. Système de traitement d'informations selon la revendication 1, dans lequel l'unité de transmission d'image (122) est en outre configurée pour transmettre l'information sur la position conjointement avec l'image partagée.

6. Système de traitement d'informations selon l'une quelconque des revendications 1 à 5, comprenant en outre :
une unité de détermination d'état de préparation d'imagerie (127), configurée pour déterminer si le second utilisateur est dans un état de préparation d'enregistrement de l'image passante,
l'unité d'acquisition d'image (121) étant en outre configurée pour acquérir l'image passante acquise avant ou après un enregistrement d'une image photographiée, et
l'unité de transmission d'image (122) étant en outre configurée pour transmettre l'image passante en tant que l'image partagée quand le second utilisateur est dans l'état de préparation d'enregistrement.

7. Système de traitement d'informations selon la revendication 1, dans lequel l'unité d'acquisition d'autorisation (128) est en outre configurée pour acquérir l'autorisation du second utilisateur en réponse à une demande en provenance d'un partageur de l'image partagée transmise.

8. Système de traitement d'informations selon la revendication 7,
dans lequel l'unité d'acquisition d'autorisation (128) est en outre configurée pour acquérir l'autorisation du second utilisateur en réponse à une demande de changement de taille de l'image partagée en provenance du partageur.

9. Système de traitement d'informations selon l'une quelconque des revendications 1 à 8, comprenant en outre :
une unité d'acquisition de signal audio (129), configurée pour acquérir un signal audio joint à l'image passante ; et
une unité de transmission de signal audio (1210), configurée pour transmettre, au serveur (200) le signal audio en tant que signal audio partagé,
l'unité d'acquisition d'autorisation (128) étant en outre configurée pour acquérir une autorisation de l'utilisateur par rapport à une transmission de l'image partagée et du signal audio partagé ou à une publication de l'image partagée transmise et du signal audio partagé transmis, indépendamment pour l'image partagée et le signal audio partagé chacun.

10. Système de traitement d'informations selon l'une quelconque des revendications 1 à 9,
dans lequel le second utilisateur effectue l'imagerie au moyen d'un appareil d'imagerie qui acquiert une image de champ visuel du second utilisateur, et
dans lequel l'unité de réception d'information d'instruction (123) est en outre configurée pour recevoir une information d'instruction sur une opération pour déplacer le second utilisateur ou le champ visuel du second utilisateur.

11. Système de traitement d'informations selon l'une quelconque des revendications 1 à 10,
dans lequel l'unité d'acquisition d'image (121) est en outre configurée pour acquérir l'image passante qui n'inclut pas le second utilisateur.

12. Procédé de traitement d'informations pour le système de traitement d'informations selon la revendication 1, le procédé consistant à :
acquérir une image passante ;
transmettre au serveur (200) l'image passante en tant qu'image partagée ;
recevoir, en provenance du serveur (200), une information d'instruction sur une opération du second utilisateur qui effectue une imagerie, l'information d'instruction étant entrée en tant que réponse par le premier utilisateur en référence à l'image partagée ; et
émettre l'information d'instruction vers le second utilisateur, l'information d'instruction indiquant qu'il faut enregistrer l'image passante pour le second utilisateur ;
acquérir une autorisation du second utilisateur par rapport à une transmission de l'image partagée au serveur (200) ou à une publication sur le serveur (200) de l'image partagée ;
acquérir une information sur une position du second utilisateur ; et
acquérir l'autorisation du second utilisateur quand la position du second utilisateur satisfait à une condition prédéterminée.

13. Programme amenant un ordinateur à établir une communication bidirectionnelle et à réaliser le procédé selon la revendication 12.
